# EUROPÄISCHE PATENTSCHRIFT

(11) **EP 3 166 991 B1**
(45) Veröffentlichungstag und Bekanntmachung des Hinweises auf die Patenterteilung: **12.08.2020**
(21) Anmeldenummer: 15733374.1
(22) Anmeldetag: 17.06.2015
(51) Int. Cl.: C08G 77/08, C08G 77/442, C08G 77/46

(54) **PLATIN ENTHALTENDE ZUSAMMENSETZUNG**
COMPOSITION CONTAINING PLATINUM
COMPOSITION CONTENANT DU PLATINE

(30) Priorität: 11.07.2014 DE 102014213507
(43) Veröffentlichungstag der Anmeldung: 17.05.2017
(73) Patentinhaber: Evonik Operations GmbH, 45128 Essen (DE)
(72) Erfinder: KNOTT, Wilfried, 45355 Essen (DE)
(74) Vertreter: Evonik Patent Association
(86) Internationale Anmeldenummer: PCT/EP2015/063551
(87) Internationale Veröffentlichungsnummer: WO 2016/005157

(56) Entgegenhaltungen:
- EP-A1- 0 075 703
- EP-A2- 1 013 701
- EP-A2- 1 754 740

## Beschreibung

Die Erfindung betrifft eine Zusammensetzung enthaltend elementares Platin und/oder mindestens eine platinhaltige Verbindung, bei der das Platin eine positive Wertigkeit aufweist, und eine oder mehrere, organische, Kohlenstoffatome, Wasserstoffatome und mindestens zwei Sauerstoffatome aufweisende Verbindungen, wobei mindestens eine der Verbindungen mindestens eine olefinische Unsättigung aufweist, welche dadurch gekennzeichnet ist, dass die Zusammensetzung einen Anteil an organischen, Kohlenstoffatome, Wasserstoffatome und mindestens zwei Sauerstoffatome aufweisenden Verbindungen von 50,0 bis 99,9 Gew.-% und einen Anteil an der Summe aus elementarem Platin und platinhaltigen Verbindungen von 0,1 bis 50,0 Gew.-% jeweils bezogen auf die Zusammensetzung aufweist, mit der Maßgabe, dass die Summe der Anteile an organischen, Kohlenstoffatome, Wasserstoffatome und mindestens zwei Sauerstoffatome aufweisenden Verbindungen, elementarem Platin und platinhaltigen Verbindungen mindestens 90 Gew.-% bezogen auf die Zusammensetzung beträgt und der Massgabe, dass der Gehalt an olefinischer Unsättigung mindestens 0,1 g Jod/ 100 g der organischen, Kohlenstoffatome, Wasserstoffatome und mindestens zwei Sauerstoffatome aufweisenden Verbindungen, entsprechend mindestens 0,004 meq/g beträgt, ein Verfahren zur Herstellung dieser Zusammensetzung sowie deren Verwendung.

SiC-verknüpfte, organomodifizierte Siloxane, speziell Polyethersiloxane, stellen mit ihrem weit einstellbaren Tensidverhalten eine industriell sehr wichtige Stoffklasse dar. Der etablierte Weg zur Herstellung dieser Substanzen liegt in der Platinmetall-katalysierten Anlagerung SiH-Gruppen tragender Siloxane und Silane an olefinisch funktionalisierte Verbindungen, wie z.B. an Allylpolyether.

Die Verwendung von Platinkatalysatoren für die Anlagerung von Silanen oder Siloxanen mit SiH-Gruppen an Verbindungen mit einer oder mehreren olefinischen Doppelbindungen ist bekannt (Hydrosilylierung) und z.B. in dem Buch "Chemie und Technologie der Silicone", Verlag Chemie, 1960, Seite 43, und in der Patentliteratur, z.B. in der DE-A-26 46 726, der EP-A-0 075 703 und der US-A-3 775 452, beschrieben. In der heutigen betrieblichen Praxis haben sich überwiegend Hexachloroplatinsäure und cis-Diamminoplatin(II)chlorid durchgesetzt.

In jüngerer Zeit häufig eingesetzte Platin-Katalysatoren sind solche vom Karstedt-Typ (US 3 814 730). Diese neigen bei der Herstellung organomodifizierter Siloxane, insbesondere der Allylpolyethersiloxane, zu Desaktivier- und Abschaltphänomenen, so dass sich oft die Notwendigkeit zur Nachkatalyse und/oder auch der drastischen Temperaturanhebung in der Anlagerungsreaktion ergibt.

In der WO-A-98/00463 sind definierte feste Verbindungen mit hohen Zersetzungstemperaturen (144,3 °C und 138,4 °C) beschrieben, die, ausgehend vom Karstedt-Katalysator, durch Zugabe ausgewählter elektronenarmer Olefine ein aktives und zugleich stabiles Katalysatorsystem für die homogene Hydrosilylierung sein sollen. Die erhöhte Aktivität wird auf die Einführung starker π-Säure-Liganden, wie insbesondere Methylnaphthochinon bzw. Tetraethyltetracarboxylatoethylen, zurückgeführt. In den angegebenen Beispielen wird Triethylsilan an Vinyltrimethylsilan angelagert, wobei die Olefinkomponente mit 100 % Überschuss zum Einsatz kommt. Trotz dieses hohen Überschusses und unter Berücksichtigung, dass die Vinylgruppe im Gegensatz zur Allylgruppe nicht isomerisierungsaktiv ist, schaltet hier die Katalyse unter Desaktivierung bei 50 °C nach 2 Stunden ab, wobei der SiH-Umsatz nur 68 % erreicht. Bei 73 °C zersetzt sich dieses Katalysatorsystem sofort und führt nur zu 18 % SiH-Umsatz (P Steffanut et al., Chem. Eur. J. 1998, 4, No. 10, Seite 2014).

In EP 1 520 870 wird ein Katalysator beschrieben, der etliche der genannten Probleme überwindet. Der Katalysator wird dadurch hergestellt, dass Platin⁽⁰⁾-Komplexkatalysatorlösungen, insbesondere solche auf Basis kommerziell erhältlicher Karstedt-Komplexe, mit wirksamen Mengen aktivierender C₂₋₆-Olefinen versetzt werden, bevor diese zur Hydrosilylierungsmatrix gegeben werden und dann die Hydrosilylierung bei moderaten Temperaturen vorzugsweise zwischen ca. 20 °C bis ca. 150 °C durchführt.

Das Dokument EP 1 013 701 offenbart im Beispiel 1 eine Zusammensetzung, die der Zusammensetzung des Anspruchs 1 entspricht, außer dass die platinhaltige Verbindung / Allylpolyether Mischung nur 4 ppm platinhaltiger Verbindung enthält.

Bei der Verwendung von Platinkatalysatoren oder deren Herstellung kommen jedoch häufig pulverförmige, platinhaltige Substanzen zum Einsatz. Die Handhabung solcher pulverförmiger Substanzen, die oft auch toxisch sind, ist wegen der Staubbelastung sowie der schwierigen und wegen Staubverlusten ungenauen Dosage problematisch.

Abhängig von der Partikelgrößenverteilung der pulverförmigen platinhaltigen Substanzen höherer Wertigkeit stellt sich zudem bei der Durchführung von SiC-Verknüpfungsreaktionen insbesondere in Siliconpolyethersystemen das Problem einer zu hohen Platinkonzentration an der Katalysatoreintragstelle des Hydrosilylierreaktors (lokale Überkonzentration), die Ursache unerwünschter Platinabscheidung und von Gelbildungen ist.

Aufgabe der vorliegenden Erfindung war deshalb die Bereitstellung eines Platinkatalysators oder eines Platinkatalysatorsystems der bzw. das eines oder mehrere der oben genannten Probleme überwindet.

Überraschenderweise wurde gefunden, dass die in den Ansprüchen sowie der folgenden Beschreibung näher beschriebenen Zusammensetzungen diese Aufgabe lösen.

Gegenstand der vorliegenden Erfindung sind deshalb Zusammensetzungen enthaltend elementares Platin und/oder mindestens eine platinhaltige Verbindung, bei der das Platin eine positive Wertigkeit aufweist, und eine oder mehrere, organische, Kohlenstoffatome, Wasserstoffatome und mindestens zwei Sauerstoffatome aufweisende Verbindungen (nachfolgend OHC-Verbindungen genannt), wobei mindestens eine der Verbindungen mindestens eine olefinische Unsättigung aufweist, welche dadurch gekennzeichnet sind, dass die Zusammensetzungen einen Anteil an organischen, Kohlenstoffatome, Wasserstoffatome und mindestens zwei Sauerstoffatome aufweisenden Verbindungen von 50,0 bis 99,9 Gew.-% und einen Anteil an der Summe aus elementarem Platin und platinhaltigen Verbindungen von 0,1 bis 50,0 Gew.-% jeweils bezogen auf die Zusammensetzung aufweisen, mit der Maßgabe, dass die Summe der Anteile an organischen, Kohlenstoffatome, Wasserstoffatome und mindestens zwei Sauerstoffatome aufweisenden Verbindungen, elementarem Platin und platinhaltigen Verbindungen mindestens 90 Gew.-% bezogen auf die Zusammensetzung beträgt und der Massgabe, dass der Gehalt an olefinischer Unsättigung mindestens 0,1 g Jod/ 100 g der organischen, Kohlenstoffatome, Wasserstoffatome und mindestens zwei Sauerstoffatome aufweisenden Verbindungen, entsprechend mindestens 0,004 meq/ g beträgt.

Ebenfalls Gegenstand der vorliegenden Erfindung ist ein Verfahren zur Herstellung der erfindungsgemäßen Zusammensetzung, welches dadurch gekennzeichnet ist, dass eine oder mehrere organische, Kohlenstoffatome, Wasserstoffatome und mindestens zwei Sauerstoffatome aufweisende Verbindungen, wobei mindestens eine der Verbindungen eine olefinische Unsättigung aufweist, deren Gehalt an olefinischer Unsättigung mindestens 0,1 g Jod/ 100 g der organischen, Kohlenstoffatome, Wasserstoffatome und mindestens zwei Sauerstoffatome aufweisenden Verbindungen, entsprechend mindestens 0,004 meq/ g beträgt,in einem Gefäß vorgelegt wird, welches mit einem Rührer, vorzugsweise einer Dispergierscheibe, ausgestattet ist, und unter Rühren pulverförmiges Platin und/oder eine oder mehrere pulverförmige, platinhaltige Verbindungen zugegeben wird/werden, wobei die eingesetzte Menge an pulverförmiges Platin und/oder eine oder mehrere pulverförmige, platinhaltige Verbindungen so gewählt wird, dass die Zusammensetzung einen Anteil an organischen, Kohlenstoffatome, Wasserstoffatome und mindestens zwei Sauerstoffatome aufweisenden Verbindungen von 50,0 bis 99,9 Gew.-% und einen Anteil an der Summe aus elementarem Platin und platinhaltigen Verbindungen von 0,1 bis 50,0 Gew.-% jeweils bezogen auf die Zusammensetzung aufweist.

Außerdem ist Gegenstand der vorliegenden Erfindung die Verwendung der erfindungsgemäßen Zusammensetzung als Katalysator in einem Verfahren, bei dem H-Si-Gruppen aufweisende Verbindungen mit Verbindungen, die olefinische Doppelbindungen aufweisen, umgesetzt werden.

Die erfindungsgemäßen Zusammensetzungen haben den Vorteil, dass mit ihnen eine staubfreie Lagerung und Zudosage des häufig giftigen und/oder kanzerogenen Katalysators möglich ist.

Die Zugabe des Katalysators in Form der erfindungsgemäßen Zusammensetzung hat außerdem den Vorteil, dass ein genaueres Zudosieren des Katalysators zum Reaktionsgemisch möglich ist, da staubförmige Anhaftungen an Rohrleitungen oder ähnlichem verhindert werden.

Vorzugsweise werden diese Vorteile erreicht, ohne dass eine Verminderung der Aktivität des Katalysators feststellbar ist.

Ein weiterer Vorteil der erfindungsgemäßen Zusammensetzung besteht darin, dass die Zusammensetzung über einen längeren Zeitraum lagerstabil ist. So konnten erfindungsgemäße Zusammensetzungen abgedunkelt 3 Monate bei 22°C gelagert werden, ohne dass eine Abnahme der katalytischen Aktivität feststellbar war. Der Begriff der Lagerstabilität wird im Rahmen dieser Lehre an der fehlenden Tendenz der erfinderischen Zusammensetzungen zur Platinabscheidung festgemacht und nicht etwa an der Sedimentation von Feststoffpartikeln oder aber der Kristallisation von Salzen.

Es wurde gefunden, dass zur Erzielung lagerstabiler Zubereitungen, insbesondere bei Verwendung von Di-µ-chloro-bis[chloro(cyclohexen)platin(II)] (Pt 92), es notwendig ist, dass die mindestens zwei Sauerstoffatome aufweisende Verbindung (OHC-Verbindung) auch einen messbaren Gehalt an olefinischer Unsättigung aufweist. Lagert man zum Beispiel 0,55 Gewichts-% Platin enthaltende Di-µ-chloro-bis[chloro(cyclohexen)platin(II)] (Pt 92) - Zubereitungen in vollkommen gesättigten OHC-Verbindungen wie z.B. in Ethylenglykol oder in 1,2-Dimethoxyethan oder in Butyldiglykol so neigen diese bereits nach 2 bis 3 Tagen abgedunkelter Lagerung bei 22°C zu braun-schwarzen Platinausscheidungen.

Zubereitungen von Di-µ-chloro-bis[chloro(cyclohexen)platin(II)] (Pt 92) in Allylalkohol gestarteten, Methyl-veretherten Polyetherolen des mittleren Molekulargewichts von 1400 g/ mol, die in ihrem Polymergerüst Ethylenoxyd/Propylenoxyd-Anteile (EO/ PO) von 42/ 58 bzw. 12/ 88 aufweisen, neigen dagegen beim abgedunkelten Stehenlassen bei 22°C ohne Zersetzung zur Kristallisation des Platinkomplexes, der sich jeweils grob kristallin am Boden des Aufbewahrungsgefäßes absetzt.

Wählt man zur Herstellung einer 0,55 Gewichts-% Platin enthaltenden Di-µ-chloro-bis[chloro(cyclohexen)platin(II)] (Pt 92)-Zubereitung beispielsweise ein Allylalkohol gestartetes, hydroxyfunktionelles Polyetherol des mittleren Molekulargewichts von 800 g/ mol, das in seinem Polymergerüst Gewichtsanteile von Ethylenoxyd/ Propylenoxyd- (EO/ PO) von 74/ 26 aufweist, erhält man ein lagerstabiles Stoffsystem, das nach 12 Wochen abgedunkelter Lagerung bei 22°C weder die Tendenz zur Platinabscheidung noch die Tendenz der zuvor beschriebenen Kristallisation zeigt.

Je nach verwendeter Platinverbindung kann der Einsatz der erfindungsgemäßen Zusammensetzung zudem eine Steigerung der Aktivität, sichtbar am früheren Klarpunkt und messbar als SiH-Umsatz als Funktion der Zeit verglichen mit herkömmlichen pulverförmigen Katalysatoren bei Hydrosilylierungsreaktionen bewirken.

Für die Qualität der angestrebten SiC-Verknüpfungsprodukte, insbesondere der Polyethersiloxane, die z.B. Anwendung als Polyurethanschaumstabilisatoren oder als Lackadditive finden, ist der Einsatz der erfindungsgemäßen Platinverbindungen höherer Wertigkeit enthaltenden Zubereitungen von Vorteil, da bei deren Einsatz in Batchprozessen an der Eingabestelle des Hydrosilylierungsreaktors lokale Überkonzentrationen von Platin vermieden werden, die Ursache unerwünschter Platinabscheidung und von Gelbildungen sind.

Die erfindungsgemäßen Zusammensetzungen, ein Verfahren zu deren Herstellung und die Verwendung der Zusammensetzung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Unter als Pulver vorliegenden Stoffen bzw. unter pulverförmigen Stoffen werden solche Feststoffe verstanden, die als Mischung von Partikeln vorliegen. Vorzugsweise weisen die pulverförmigen Mischungen Partikel mit einer mittleren Partikelgröße R in den Grenzen 0,01 mm < R < 0,1 mm auf. Die Anteile von Partikeln mit Durchmessern R ≥ 20 µm können dabei zum Beispiel durch Siebanalyse nach DIN 66165-1 respektive in ihrer Durchführung nach DIN 66165-2 bestimmt werden. Das gebräuchlichste Verfahren der Siebanalyse ist die Trockensiebung wie sie zum Beispiel in einer Laborsiebmaschine AS200 tap der Firma Retsch durchgeführt werden kann.

Für die Bestimmung der Komgrößenverteilung in Pulvem, die Anteile von Partikeln mit Durchmessern R kleiner als 20 µm und sogar in den Nanometerbereich ≥ 0,01 µm hinein aufweisen, eignet sich zum Beispiel die Laserbeugung, bei der Partikelgrößenverteilungen durch Messung der Winkelabhängigkeit der Intensität von gestreutem Licht eines Laserstrahls, der eine dispergierte Partikelprobe durchdringt, ermittelt werden. Aufbauend auf diesem Messprinzip ist zum Beispiel das Mastersizer 3000-Partikelgrößenmessgerät der Firma Malvem Instruments Ltd, England zu nennen, das einen Partikelgrößenbereich von 0,01µm bis zu 3500µm abdeckt.

Die erfindungsgemäße Zusammensetzung enthaltend elementares Platin und/oder mindestens eine platinhaltige Verbindung, bei der das Platin eine positive Wertigkeit aufweist, und eine oder mehrere, organische, Kohlenstoffatome, Wasserstoffatome und mindestens zwei Sauerstoffatome aufweisende Verbindungen, wobei mindestens eine der Verbindungen mindestens eine olefinische Unsättigung aufweist, zeichnet sich dadurch aus, dass die Zusammensetzung einen Anteil an organischen, Kohlenstoffatome, Wasserstoffatome und mindestens zwei Sauerstoffatome aufweisenden Verbindungen von 50,0 bis 99,9 Gew.-%, vorzugsweise von 75 bis 99,8 Gew.-%, bevorzugt von 90 bis 99,7 Gew.-% und besonders bevorzugt von 99,0 bis 99,7 Gew.-% und einen Anteil an der Summe aus elementarem Platin und platinhaltigen Verbindungen von 0,1 bis 50,0 Gew.-%, vorzugsweise von 0,2 bis 25 Gew.-%, bevorzugt von 0,3 bis 10 Gew.-% und besonders bevorzugt von 0,3 bis 1,0 Gew.-%, jeweils bezogen auf die Zusammensetzung aufweist, mit der Maßgabe, dass die Summe der Anteile an organischen, Kohlenstoffatome, Wasserstoffatome und mindestens zwei Sauerstoffatome aufweisenden Verbindungen (OHC-Verbindungen), elementarem Platin und platinhaltigen Verbindungen mindestens 90 Gew.-%, vorzugsweise 95 Gew.-%, besonders bevorzugt 99 Gew.-% und ganz besonders bevorzugt 100 Gew.-% bezogen auf die Zusammensetzung beträgt und der Massgabe, dass der Gehalt an olefinischer Unsättigung mindestens 0,1 g Jod/ 100 g der organischen, Kohlenstoffatome, Wasserstoffatome und mindestens zwei Sauerstoffatome aufweisenden Verbindungen (OHC-Verbindungen), entsprechend mindestens 0,004 meq/ g beträgt.

Als platinhaltige Verbindung mit positiver Wertigkeit ist in der erfindungsgemäßen Zusammensetzung vorzugsweise eine Platin(II)Verbindung vorhanden. Bevorzugt ist/sind als platinhaltige Verbindung/en mit positiver Wertigkeit in der erfindungsgemäßen Zusammensetzung cis-(NH₃)₂PtCl₂ und/oder Di-µ-chloro-bis[chloro(cyclohexen)platin(II)] (Pt 92) vorhanden. Besonders bevorzugt beträgt der Anteil an cis-(NH₃)₂PtCl₂ mehr als 95 mol-%, bevorzugt mehr als 99,5 mol-% bezogen auf den Gesamtgehalt an Platin in der Zusammensetzung.

Bevorzugte erfindungsgemäße Zusammensetzungen sind solche, die weniger als 5 mol-%, bevorzugt weniger als 0,5 mol-% an elementarem Platin bezogen auf die Gesamtmenge an Platin aufweisen. Besonders bevorzugt sind solche erfindungsgemäßen Zusammensetzungen, die keine nachweisbaren Mengen an elementarem Platin und/oder Platin(0)(Komplex-)Verbindungen aufweisen.

In der erfindungsgemäßen Zusammensetzung sind als OHC-Verbindungen bevorzugt solche vorhanden, die der Formel (I) genügen:

A[-O-(CH₂-CHR-O-)ₘ-(CH₂-CH₂-O-)ₙ-(CH₂-CH(CH₃)-O-)ₒ-Z]ₐ (I)

hierin ist
- A: entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der OHC-Verbindung,
- R: unabhängig voneinander eine gesättigte Alkylgruppe mit 2-18 C-Atomen ist oder ein aromatischer Rest, respektive bevorzugt eine Ethylgruppe oder ein Phenylrest,
- Z: entweder Wasserstoff, ein linearer oder verzweigter, gesättigter oder ungesättigter Kohlenwasserstoffrest mit 1-18 C-Atomen bevorzugt eine Methyl-, Ethyl-, Propyl-, Butyl-, Vinyl-, Allylgruppe ist, oder
der Rest einer organischen Säure der Formel -C(=O)-Z_{E}, wobei Z_{E} ein organischer Rest, bevorzugt ein linearer oder verzweigter, gesättigter oder olefinisch ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-Z_{c} ist, wobei Zc ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,

- m: gleich 0 bis zu 50, bevorzugt 0 bis zu 30, besonders bevorzugt 0 bis zu 20 ist
- n: gleich 0 bis zu 250, bevorzugt 3 bis zu 220, besonders bevorzugt 5 bis zu 200 ist
- o: gleich 0 bis zu 250, bevorzugt 3 bis zu 220, besonders bevorzugt 5 bis zu 200 ist
- a: gleich 1 bis zu 8, bevorzugt größer 1 bis zu 6, besonders bevorzugt 1, 2, 3 oder 4.
mit der Maßgabe, dass die Summe aus m, n und o gleich oder größer als 1 ist und der Gehalt an olefinischer Unsättigung mindestens 0,1 g Jod/ 100 g OHC-Verbindung entsprechend mindestens 0,004 meq/ g beträgt.

Vorzugsweise werden OHC-Verbindungen verwendet, die ausschließlich Wasserstoffatome, Sauerstoffatome und Kohlenstoffatome aufweisen.

Als organische, Kohlenstoffatome, Wasserstoffatome und mindestens zwei Sauerstoffatome aufweisende Verbindung(en), die eine olefinische Unsättigung aufweisen (ungesättigte OHC-Verbindung(en), sind in der erfindungsgemäßen Zusammensetzung vorzugsweise solche Verbindungen der Formeil (I) vorhanden sind, bei denen A und/oder Z einen olefinisch ungesättigten Rest aufweisen.

Bevorzugte ungesättigte OHC-Verbindungen der Formel (I) sind ungesättigte Polyether, also Verbindungen der Formel (I) bei denen die Summe aus m, n und o größer gleich 3 ist sowie Allyloxyethanol und Vinylhydroxybutanol. Insbesondere sind als ungesättigte OHC-Verbindungen in den erfindungsgemäßen Zusammensetzungen Allyloxyethanol, Vinylhydroxybutanol und/oder ein Allylalkohol-gestarteter Polyether vorhanden. Die ungesättigten OHC-Verbindungen können als Gemisch mit gesättigten OHC-Verbindungen, z. B. als Gemisch mit einem Butanol gestarteten Polyether vorhanden sein.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I) und (II). Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch altemierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung Reste von Substanzen verstanden, die den Anfang der herzustellenden OHC-Verbindung bilden, die durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein- oder mehrwertiger Alkohol, oder deren beliebige Mischungen verwendet. Für den Fall, dass mehrere Startverbindungen A als Gemisch verwendet wurden, kann der Index a auch einer statistischen Verteilung unterliegen. Z kann darüber hinaus auch der Rest einer Startverbindung Z-OH sein.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Besonders bevorzugt weisen die OHC-Verbindungen der Formel (I) eine gewichtsmittlere Molmasse von 76 bis 10.000 g/mol, bevorzugt von 100 bis 8.000 g/mol und besonders bevorzugt von 200 bis 6.000 g/mol auf.

Bevorzugt sind in den Verbindungen der Formel (I) die Reste A solche, die aus Verbindungen der Formel (II) hervorgegangen sind:

A[-OH]ₐ (II)

wobei a wie oben angedeutet, gewählt ist aus dem Bereich von 1 bis 8, bevorzugt 1 bis 6, besonders bevorzugt 1, 2, 3 oder 4.

Bevorzugte Reste A sind solche, die sich aus Verbindungen ableiten, ausgewählt aus der Gruppe der ein- oder mehrwertigen monomeren, oligomeren oder polymeren Alkohole, Phenole ableiten, Kohlenhydrate oder Kohlenhydratderivate, wobei in der Zusammensetzung Mischungen von Verbindungen der Formel (I) vorliegen können, die unterschiedliche Reste A und/oder Z aufweisen.

Als Startverbindung für die Alkoxylierungsreaktion können alle Verbindungen der Formel (II)

A[-OH]ₐ (II)

verwendet werden. Die Verbindungen der Formel (II) weisen mindestens eine Hydroxylgruppe und A = Wasserstoff oder organischen Rest auf (wie oben definiert). Der organische Rest weist mindestens ein Kohlenstoffatom auf. Unter Startverbindungen werden im Rahmen der vorliegenden Erfindung Substanzen verstanden, die den Anfang (Start) der herzustellenden OHC-Verbindung bilden, das durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein- oder mehrwertiger Alkohol, oder deren beliebige Mischungen verwendet.

Neben aliphatischen und cycloaliphatischen Verbindungen mit OH-Gruppen eignen sich als Verbindungen der Formel (II) auch beliebige Verbindungen mit 1 bis 8 phenolischen OH-Funktionen. Hierzu gehören beispielsweise Phenol, Alkyl- und Arylphenole, Bisphenol A und Novolake.

Besonders bevorzugte Alkohole sind z. B. Allylalkohol, Butanol, 1-Hexenol, Octanol, Dodecanol, Stearylalkohol, Vinyloxybutanol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit oder auf Naturstoffen basierende, Hydroxylgruppen tragende Verbindungen.

Im Rahmen dieser Erfindung umfasst der Begriff ungesättigte OHC-Verbindung eine breite Menge an Verbindungen, sowohl ungesättigte Polyether, ungesättigte Polyetherole, ungesättigte Polyetheralkohole, ungesättigte Polyetherester als auch ungesättigte Polyethercarbonate, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen. Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die ungesättigten OHC-Verbindungen sind vorzugsweise Ethylenoxid- und Propylenoxid-Derivate der genannten ungesättigten Alkohole und umfassen neben den nur von Ethylenoxid (EO)- bzw. nur von Propylenoxid (PO)-abgeleiteten Homopolymer-Strukturen auch alle zugänglichen EO-/PO-Mischderivate.

Für die Herstellung von OHC-Verbindungen, insbesondere gesättigten OHC-Verbindungen werden vorzugsweise niedermolekulare Polyetherole mit 1 bis 8 Hydroxylgruppen und gewichtsmittleren Molmassen von 100 bis 5000 g/mol als Startverbindungen verwendet. Besonders geeignet sind Polypropylenglykole, Polyethylenglykole, Poly(ethylen)-co-(propylen)glykole, Polybutylenglykole, Poly(propylen)-co-(butylen)glykole, Poly(butylen)-co-(ethylen)glykole, die mindestens eine OH-Gruppe haben. Unter diesen Polyalkylenglykolen sind insbesondere solche Verbindungen vorteilhaft, die sich von Butanol, Allylalkohol, 1-Hexenol, Vinyloxybutanol, Octanol, Decanol, Dodecanol, Butandiol, Hexandiol, Glycerin ableiten.

Im Rahmen der vorliegenden Erfindung kann eine Vielzahl an OHC-Verbindungen allein oder bevorzugt in Abmischung als Dispersionsmittel benutzt werden. Als olefinisch ungesättigte OHC-Verbindunginsbesondere bevorzugt sind Allylalkohol gestartete Polyetherole, und/ oder Alkylverätherten Allylpolyetherole und deren jeweilige Mischungen mit Propylenoxid enthaltenden Butylethem.

Besonders bevorzugt sind die olefinisch ungesättigten OHC-Verbindungen, worin A der a valente Rest einer organischen Verbindung mit einer Molmasse von 41 bis 5000 g/mol, insbesondere 41 bis 4000 g/mol ist. Im Falle von polymeren Resten A sind die bevorzugten Molmassen als gewichtsmittlere Molmassen zu verstehen. Die Molmasse der gesättigten und olefinisch ungesättigten OHC-Verbindungen kann mittels GPC unter Verwendung eines Polypropylenglykolstandards, wie er von der Firma PSF in Mainz angeboten wird, bestimmt werden.

Für die Wirksamkeit des Katalysators ist nur eine erstaunlich geringe Konzentration an olefinischer Unsättigung in der als Dispersionsmittel verwendeten OHC-Verbindung bzw. dem OHC-Verbindungsgemisch erforderlich. In diesem Zusammenhang beträgt der Gehalt an olefinischer Unsättigung mindestens 0,1 g Jod/ 100 g der OHC-Verbindung bzw. des OHC-Verbindungsgemisches entsprechend mindestens 0,004 meq/ g.

Als ungesättigte OHC-Verbindung zur Zubereitung der erfindungsgemäßen Zusammensetzung eignen sich alle Polyether oder Polyethermischungen, die eine iodometrisch oder altemativ durch quantitative ¹H-NMR-Spektroskopie bestimmbare olefinische Unsättigung von mindestens 0,1 g Jod/ 100 g Polyether entsprechend mindestens 0,004 meq/g aufweisen.

Zur Bestimmung des Gehaltes an olefinisch ungesättigten Polyoxyalkylenverbindungen eignet sich zum Beispiel die dem Fachmann geläufige Methode der Jodzahl-Bestimmung nach Hanus, bekannt als Methode DGF C-V 11 a (53) der Deutschen Gesellschaft für Fette. Die Jodzahl nach DGF C-V 11 a (53) gibt die Konzentration an Doppelbindungen in einer definierten Gewichtsmenge eines Stoffes an.

Darüber hinaus und insbesondere für die Bestimmung der in geringen, aber dennoch erfindungsrelevant wirksamen Gehalte an aliphatischer ungesättigten Gruppen in den Polyoxyalkylenverbindungen ist die ASTM Test-Methode D-2849-69 einzusetzen.

Insbesondere geeignet für die präzise Bestimmung sehr kleiner Gehalte an olefinisch ungesättigten Gruppen in Polyoxyalkylenen erweist sich die quantitative ¹H-NMR-Spektroskopie, insbesondere, wenn man die zu untersuchende Probe mit einem inneren Standard versieht. Mit hochauflösenden NMR-Geräten können die Gehaltsanteile von den in der Probe enthaltenen olefinisch ungesättigten Gruppen quantitativ bestimmt werden und auch entsprechend als Jodzahl-Äquivalent angegeben werden.

Erfindungsgemäße Verbindungen der Formel (I), die C-C-Doppelbindungen wie Allyl- oder 1-Hexenylgruppen aufweisen, eröffnen den Zugang zu SiC-verknüpften Polyethersiloxan-Copolymeren unter Addition SiH-Gruppen aufweisender Siloxane an ungesättigte Polyether. Aus der großen Zahl von Schriften, die sich auf solche bekannten Polyether beziehen, seien genannt EP 1 520 870, EP 0 075 703, US 3 775 452 und EP 1 031 603.

Geeignete Verfahren bedienen sich z.B. basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxy-funktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen.

Unter der Annahme dass jede allylgestartete Polyetherkette nur eine Doppelbindung enthält, lässt sich aus der Jodzahl das durchschnittliche Molgewicht des Polyethers berechnen. Erhöht sich der Anteil an ungesättigten Nebenprodukten im Polyether, so steigt die Jodzahl ebenfalls. Insbesondere mit Allylalkohol als Startalkohol bringt die unter alkalischer Katalyse durchgeführte Alkoxylierungsreaktion auch Propenylpolyether hervor.

Es ist erfindungsgemäß auch bevorzugt, durch Doppelmetallcyanid-Katalyse hergestellte Polyether zu verwenden. Durch Doppelmetallcyanid-Katalyse hergestellte Polyether haben in der Regel einen besonders niedrigen Gehalt an ungesättigten Endgruppen von kleiner oder gleich 0,02 Milliäquivalenten pro Gramm OHC-Verbindung (meq/g), bevorzugt kleiner oder gleich 0,015 meq/g, besonders bevorzugt kleiner oder gleich 0,01 meq/g (Bestimmungsmethode ASTM D2849-69 ), enthalten deutlich weniger Monole und haben in der Regel eine geringe Polydispersität von weniger als 1,5. Die Polydispersität (PD) kann nach einer dem Fachmann an sich bekannten Methode ermittelt werden, indem durch Gelpermeationschromatographie (GPC) sowohl das zahlenmittlere Molekulargewicht (Mn) wie auch das gewichtsmittlere Molekulargewicht (Mw) bestimmt werden. Die Polydispersität ergibt sich als PD = Mw/Mn. Derartige Polyether werden z. B. in der US-A 5,158,922 und der EP-A 0 654 302 beschrieben.

Unabhängig vom Herstellungsweg sind ungesättigte Polyoxyalkylenverbindungen der Formel (I) bevorzugt geeignet, die vorzugsweise eine Polydispersität Mw/Mn von 1,0 bis 1,5 aufweisen, bevorzugt mit einer Polydispersität von 1,0 bis 1,3.

Die Menge an ungesättigten OHC-Verbindungen, zur Herstellung der erfindungsgemäßen (Hydrosilylierungskatalysator) Zusammensetzung, kann innerhalb von breiten Bereichen variieren. Als ungesättigte OHC-Verbindungen, insbesondere ungesättigte Polyether sind in der erfindungsgemäßen Zusammensetzung vorzugsweise solche vorhanden, die mit Allylalkohol gestartet sind oder deren Mischungen oder auch Mischungen von ungesättigten Polyethem mit zum Beispiel Butanol-gestarteten Polyethem. Vorzugsweise werden Allyloxyethanol, Vinylhydroxybutanol oder solche Polyether zur Herstellung der erfindungsgemäßen Zubereitung eingesetzt, die ausgewählt sind aus den ungesättigten Polyoxyalkylenverbindungen, die Eingang in die beabsichtigte SiC-Verknüpfungsreaktion nehmen.

Besonders bevorzugt wird die erfindungsgemäße Zusammensetzung hergestellt, indem man den jeweiligen Platinkomplex oder deren Mischung in einer Teilmenge und/oder der Gesamtmenge von einer und/oder mehreren als Bestandteil der Hydrosilylierungsrezeptur vorgesehenen, ungesättigten Polyoxyalkylenverbindung(en) unter Einbringung von Rühr- bzw. Scherenergie dispergiert, bevor man die so erfindungsgemäß hergestellte (Katalysator)-Zusammensetzung zur Initiierung der SiC-Verknüpfungsreaktion in die Reaktionsmatrix einträgt.

Der Anteil an ungesättigten OHC-Verbindungen, insbesondere an ungesättigten Polyethem beträgt in der erfindungsgemäßen Zusammensetzung besonders bevorzugt von 75 bis 99,8 Gew.-% und ganz besonders bevorzugt von 99,0 bis 99,7 Gew.-% und der Anteil der Summe aus elementarem Platin und/oder platinhaltigen Verbindungen beträgt besonders bevorzugt von 0,2 bis 25 Gew.-% und ganz besonders bevorzugt von 0,3 bis 1 Gew.-% jeweils bezogen auf die Zusammensetzung.

In der erfindungsgemäßen Zusammensetzung sind die Bestandteile vorzugsweise homogen verteilt. Die Zusammensetzung kann z. B. in Form einer Lösung, Suspension, Dispersion, Paste oder Salbe vorliegen oder aber aus Gemischen dieser Grenzformen bestehen.

Die erfindungsgemäße Zusammensetzung kann auf unterschiedlichste Weise erhalten werden. Vorzugsweise wird die erfindungsgemäße Zusammensetzung durch ein Verfahren zur Herstellung einer erfindungsgemäßen Zusammensetzung erhalten, welches sich dadurch auszeichnet, dass eine oder mehrere organische, Kohlenstoffatome, Wasserstoffatome und mindestens zwei Sauerstoffatome aufweisende Verbindungen, wobei mindestens eine der Verbindungen eine olefinische Unsättigung aufweist, und der Gehalt an olefinischer Unsättigung mindestens 0,1 g Jod/ 100 g organischen, Kohlenstoffatome, Wasserstoffatome und mindestens zwei Sauerstoffatome aufweisenden Verbindungen, entsprechend mindestens 0,004 meq/ g beträgt,in einem Gefäß vorgelegt wird, welches mit einem Rührer, vorzugsweise einer Dispergierscheibe, ausgestattet ist, und unter Rühren pulverförmiges Platin und/oder eine oder mehrere pulverförmige, platinhaltige Verbindungen zugegeben wird/werden, wobei die eingesetzte Menge an pulverförmiges Platin und/oder eine oder mehrere pulverförmige, platinhaltige Verbindungen so gewählt wird, dass die Zusammensetzung einen Anteil an organischen, Kohlenstoffatome, Wasserstoffatome und mindestens zwei Sauerstoffatome aufweisenden Verbindungen von 50,0 bis 99,9 Gew.-%, vorzugsweise von 75 bis 99,8 Gew.-%, bevorzugt von 90 bis 99,7 Gew.-% und besonders bevorzugt von 99,0 bis 99,7 Gew.-% und einen Anteil an der Summe aus elementarem Platin und platinhaltigen Verbindungen von 0,1 bis 50,0 Gew.-%, vorzugsweise von 0,2 bis 25 Gew.-%, bevorzugt von 0,3 bis 10 Gew.-% und besonders bevorzugt von 0,3 bis 1,0 Gew.-% jeweils bezogen auf die Zusammensetzung aufweist.

Als pulverförmige platinhaltige Verbindungen werden vorzugsweise eine oder mehrere Platin(II)Verbindungen eingesetzt. Bevorzugt wird/werden als pulverförmige platinhaltige Verbindung/en in dem erfindungsgemäßen cis-(NH₃)₂PtCl₂ und/oder Di-µ-chloro-bis[chloro(cyclohexen)platin(II)] (Pt 92) eingesetzt.

Als ungesättigte OHC-Verbindungen eignen sich z. B. Allyloxyethanol, Vinylhydroxybutanol, und ungesättigte (z.B. mit Allylalkohol-gestartete Polyether) Polyether für die Herstellung der erfindungsgemäßen Katalysatorzubereitungen. Die eingesetzten ungesättigten OHC-Verbindungen, insbesondere Polyether können sowohl Hydroxy-funktionell als auch solche sein, deren OH-Funktion z.B. mit Hilfe einer Methylgruppe verethert ist. Die eingesetzten ungesättigten OHC-Verbindungen können vorteilhaft auch in Abmischungen mit gesättigten OHC-Verbindungen, zum Beispiel Butanol gestarteten Polyethem zur Zubereitung der erfindungsgemäßen Zusammensetzungen eingesetzt werden. Desgleichen gilt auch für die nach der erfindungsgemäßen Lehre bevorzugt eingesetzten, von Ethylenoxid und Propylenoxid abgeleiteten Polyoxyalkylenverbindungen unter dem Aspekt ihres individuellen EO/ PO-Verhältnisses.

Hier eignen sich z.B. ein mit einem EO/PO-Massenverhältnis von 10/90 unter alkalischer Katalyse hergestelltes, Butanol-gestartetes Polyetherol der Molmasse von ca. 2000 Dalton mit einem ¹H-NMR-mäßig bestimmten Wert an olefinischer Unsättigung von 0,04 meq /g genauso wie ein Allylalkohol gestarteter, Methyl-endverschlossener Polyether von ca. 1400 Dalton mit einem EO/PO-Massenverhältnis von 12/88.

Darüber hinaus kann zweckmäßig sein, eine OHC-Verbindung/en, insbesondere einen Polyether für die Herstellung der Zusammensetzung zu wählen, dessen Schmelzpunkt bzw. Schmelzbereich über der im Produktionsbereich vorherrschenden mittleren Temperatur liegt. Die erfindungsgemäßen Zusammensetzungen können Mischphasensysteme repräsentieren, die beispielweise unter Einsatz von Rührorganen oder allgemein durch den Eintrag scherender, dispergierender Energie bei Temperaturen, die über dem Schmelzbereich der OHC-Verbindung/des Polyethers liegen, homogenisieren werden können. Durch kontrolliertes Abkühlen der so homogenisierten (Katalysator-)Zusammensetzungen kann eine, bei tieferen Temperaturen gleichförmig mit Edelmetallkomplex durchsetzte Matrix, gewonnen werden, die sich unmittelbar oder aber auch erst nach mehr-wöchiger Lagerung, vorzugsweise mehr als 3-monatiger Lagerung, bei tieferen Temperaturen, vorzugsweise Temperaturen von kleiner 20 °C, bevorzugt kleiner 18 °C als Katalysator verwenden lassen, ohne dass chemische Zersetzungsreaktionen mit einhergehenden Aktivitätsverlusten beobachtet werden.

Eingedenk der relativ kleinen Edelmetallmengen stellt es alternativ für eine laufende Produktion aber auch keinen wesentlichen Aufwand dar, in einem geeigneten, gegebenenfalls temperierten Gefäß unter permanentem Eintrag geringer Rührenergie stets eine verwendungsbereite Katalysatorzubereitung vorzuhalten, aus der man nach Bedarf aliquote Teilmengen für die Katalyse von Produktionsansätzen entnehmen kann. Auf diese Weise kann man auch den bereits beschriebenen, gegebenenfalls in manchen Zubereitungen beobachtbaren Kristallisationsprozessen effektiv begegnen.

Die Beladung der olefinisch ungesättigten OHC-Verbindungsphase, insbesondere Polyetherphase mit cis-Diammino-Platindichlorid oder Di-µ-chloro-bis[chloro(cyclohexen)platin(II)] (Pt 92) ist in weiten Bereichen variierbar und mit Hilfe einfach angelegter Handversuche im jeweiligen Stoffsystem zu ermitteln. Beispielsweise lassen sich in einem durch alkalische Katalyse gewonnenen, Butanol-gestarteten Polyether mit 2000 Dalton Molekulargewicht und mit einem EO/PO-Massenverhältnis von 10/90 sowie olefinischer Unsättigung problemlos 20 Massenprozent des cis-Diammino-Platindichlorid-Komplexes homogen und lagerstabil einarbeiten (Beispiel 5).

Das Zugeben des pulverförmigen Platins und/oder der pulverförmigen platinhaltigen Verbindung/en mit positiver Wertigkeit erfolgt vorzugsweise so, dass diese mit der/den olefinisch ungesättigten OHC-Verbindung/en oder mit der in dem Gefäß vorhandenen flüssigen Zusammensetzung in das Gefäß gespült werden.

Das Zugeben des pulverförmigen Platins und/oder der pulverförmigen platinhaltigen Verbindung erfolgt vorzugsweise bei einer Temperatur im Gefäß von 30 bis 75 °C, bevorzugt 35 bis 50 °C.

Es kann vorteilhaft sein, wenn in dem erfindungsgemäßen Verfahren als Gefäß ein Kugelgefäß zum Einsatz kommt, welches mit einem seitlichen Stutzen ausgestattet ist, über welchen das pulverförmige Platin und/oder die pulverförmige platinhaltige Verbindung zugegeben werden kann. Bevorzugt weist das Gefäß einen seitlichen Stutzen mit einem drehbaren Anschluss auf, mit dem ein Behälter, welcher das pulverförmige Platin und/oder die pulverförmige platinhaltige Verbindung enthält, angeschlossen und zur Entleerung so gedreht werden kann, dass der Inhalt durch Schwerkraft in das Gefäß rutschen kann. Auf diese Weise kann verhindert werden, dass Platin aufweisende Substanzen in die Umgebungsluft gelangen können.

Die erfindungsgemäße Zusammensetzung kann in verschiedenen Verfahren, in denen Platin oder Platinhaltige Verbindungen Verwendung finden, eingesetzt werden. Vorzugsweise wird die erfindungsgemäße Zusammensetzung als Katalysator in einem Verfahren verwendet, bei dem H-Si-Gruppen aufweisende Verbindungen mit Verbindungen, die olefinische Doppelbindungen aufweisen, umgesetzt werden. Vorzugsweise ist das Verfahren ein sogenanntes Hydrosilylierungsverfahren. Geeignete SiH-Gruppen aufweisenden Silane oder Siloxane sind z.B. in dem Buch "Chemie und Technologie der Silicone", Verlag Chemie, 1960, beschrieben.

In dem erfindungsgemäßen Verfahren werden als H-Si-Gruppen tragende Verbindungen vorzugsweise
monomere Silane, wie z.B. R₃SiH; R₂SiH₂; RSiH₃;
cyclische Silane, wie z.B. (RHSiO}₄; (RHSiO}₃;
lineare oder verzweigte oligomere oder polymere Siloxane wie
R₃SiO-(R₂SiO-)ₐ(RSi(H)O-)_{b}SiR₃, wobei a ≥ 0 und b ≥ 1 ist;
HR₂SiO-(R₂SiO-}_{c}(RSi(H)O-)_{d}SiR₂H, wobei c und d ≥ O sind;
Verbindungen der allgemeinen Formel (III) 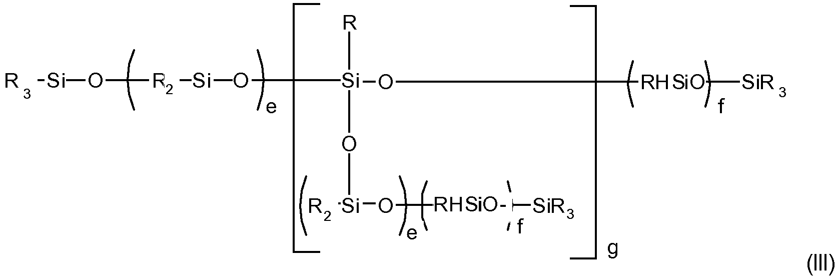 worin
e = ≥0,
f = ≥ 1 und
g = ≥ 1 ist,
R gleich oder verschieden Gruppen sind, die die Anlagerungsreaktion nicht behindern, wie Alkylgruppen mit 1 bis 8 Kohlenstoffatomen; substituierte Alkylgruppen mit 1 bis 8 Kohlenstoffatomen, wie die 3-Chlorpropyl-, 1-Chlormethyl-, 3-Cyanopropylgruppe; Arylgruppen, wie die Phenylgruppe; Aralkylgruppen, wie die Benzylgruppe; Alkoxy- oder Alkoxyalkylgruppen, wie die Ethoxy- oder Ethoxypropylgruppe, eingesetzt.

Als Verbindungen mit olefinischen Doppelbindungen werden in dem erfindungsgemäßen Verfahren vorzugsweise Verbindungen der Formeln

CH₂=CH-CH₂-O-(CH₂-CH₂O)ₓ-(CH₂-CH(R')O-)_{y}-(SO)_{z}-R"

CH₂=CH-O-(CH₂-CH₂O-)ₓ-(CH₂-CH(R')O)ᵥ-R"

CH₂=CH-CH₂-R^{IV}

CH₂=CH-(O)_{x'}-R^{IV}

worin
x = 0 bis 100,
x'= 0 oder 1,
y= 0 bis 100,
z = 0 bis 100,
R' eine gegebenenfalls substituierte Alkylgruppe mit 1 bis 4 C-Atomen ist und
R" einen Wasserstoffrest oder eine Alkylgruppe mit 1 bis 4 C-Atomen; die Gruppe -C(O)-R'" mit R'" = Alkylrest;
die Gruppe -CH₂₋O-R'; eine Alkylarylgruppe, wie die Benzylgruppe; die Gruppe -C(O)NH-R' bedeutet,
R^{IV} ein gegebenenfalls substituierter Kohlenwasserstoffrest mit 7 bis 47, vorzugsweise 13 bis 37 C-Atomen,
SO der Rest C₆H₅-CH(-)-CH₂-O- (Styroloxidrest) bedeutet,
eingesetzt.

Bei der erfindungsgemäßen Verwendung wird bevorzugt soviel an der erfindungsgemäßen Zusammensetzung dem Reaktionsgemisch zugegeben, dass die Menge an Platin von 1 bis 100 wppm bezogen auf das Reaktionsgemisch beträgt.

Die Durchführung des Verfahrens gemäß der erfindungsgemäßen Verwendung kann wie in EP 1520870 A1 beschrieben erfolgen. Insbesondere kann die Durchführung des Verfahrens unter den dort genannten Bedingungen erfolgen.

Die durch erfindungsgemäße Verwendung zugänglichen Verfahren eignen sich z. B. zur Herstellung von SiC-verknüpften Systemen, die Anwendung finden im Bereich der PolyurethanSchaumstabilisatoren (z.B.: Heißweichschaum, Hartschaum, Kaltschaum, Esterschaum, etc.), die Anwendung finden als Trennmittel (Siliconwachse, strahlenhärtende Systeme wie z.B. Siliconacrylate, etc.), die Anwendung finden in Lackadditiven als Entschäumer, Entlüfter, Gleit-und Verlaufsadditive, als Antigraffiti Additive, in Anwendungen von Netzmitteln, in kosmetischen Formulierungen für Verdicker, Emulgatoren, etc.

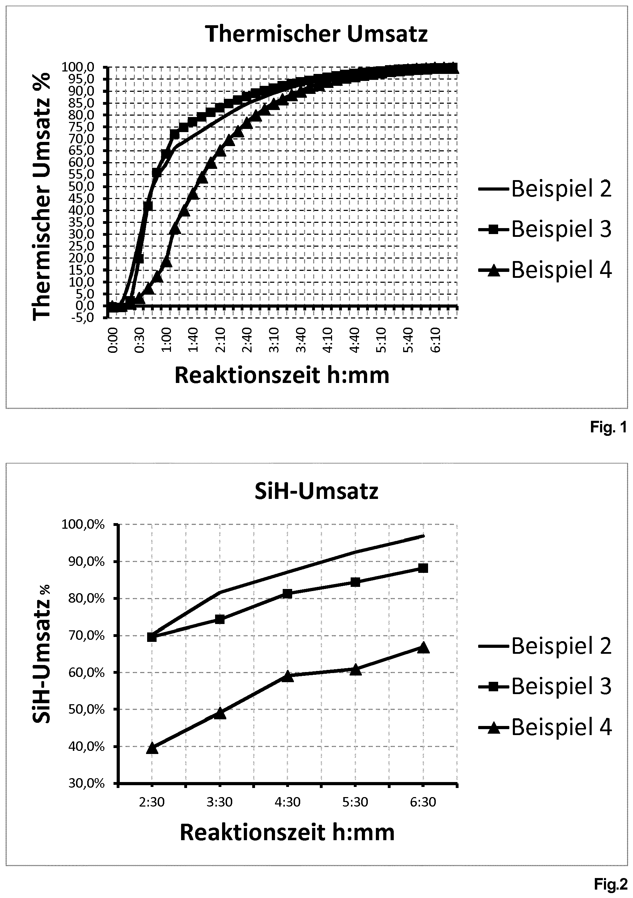

Die vorliegende Erfindung wird durch die Figuren Fig. 1 und Fig. 2 näher erläutert, ohne dass die Erfindung auf diese Figur beschränkt sein soll. In Fig. 1 wird für die Beispiele 2 bis 4 ein Diagramm gezeigt, in dem der thermische Umsatz gegen die Reaktionszeit aufgetragen ist. In Fig. 2 wird für die Beispiele 2 bis 4 ein Diagramm gezeigt, in dem der SiH-Umsatz gegen die Reaktionszeit aufgetragen ist.

Die vorliegende Erfindung wird durch die nachfolgenden Beispiele näher erläutert, ohne dass die Erfindung auf diese Beispiele beschränkt sein soll. Dabei werden die in den Beispielen genannten prozentualen SiH-Umsätze indirekt bestimmt, indem das erhaltene Reaktionsprodukt mit Natriumbutylat in n-Butanol behandelt und die Menge noch abspaltbaren Wasserstoffs volumetrisch bestimmt wurde.

### Beispiel 1 (erfindungsgemäß)

Herstellung einer cis-Diammino-Platin(II)dichlorids-Katalysatorzubereitung in einem Allylalkohol-gestarteten, Methyl-endverschlossenen Polyether (Molgewicht (nach Jod-Zahl berechnet): 1449 g/ mol, 12 Gew.-% Ethylenoxid, 88 Gew.-% Propylenoxid, statistischer Aufbau.
15,36 mg cis-PtCl₂(NH₃)₂ werden in 2,0 g des hier bezeichneten Polyethers für ca. 30 Sekunden bei 25°C mit einem Mikrorührer Xenox 40e (Fa. Proxxon) bei 20000 Umdrehungen pro Minute homogen eingearbeitet.

### Beispiel 2 (erfindungsgemäß)

In einem Reaktionskalorimeter RC1e (Mettler-Toledo) werden 250 g eines Wasserstoffsiloxans der mittleren Formel:

(CH₃)₃Si-(O-Si(CH₃)₂)₇₈-(O-SiH(CH₃))₁₀-O-Si(CH₃)₃,

SiH-Wert: 1,52 Val/ kg
zusammen mit 748,47 g eines Allylalkohol-gestarteten, Methyl-endverschlossenen Polyethers statistischen Aufbaus (Allylpolyether) der Molmasse 1459 g/ mol (nach Jodzahl) unter Rühren auf 90°C erwärmt und dann mit 76,80 mg der im Beispiel 1 hergestellten cis-PtCl₂(NH₃)₂-Paste (10 ppm Pt bezogen auf den Gesamtansatz) versetzt. Begleitend zur Messung des thermischen Umsatzes werden dann nach 2,5, 3,5, 5,5 und 6,5 Stunden Proben gezogen, die nach Einwaage an einer Gasbürette durch Zugabe einer Natriumbutylatlösung zersetzt werden. Die reaktionsbegleitende, gasvolumetrische SiH-Wert-Bestimmung über das Volumen freigesetzten Wasserstoffgases erlaubt eine zusätzliche Umsatzkontrolle.

### Beispiel 3 (erfindungsgemäß)

Unter Beibehaltung aller sonst im Beispiel 2 genannten Parameter wird die aus Wasserstoffsiloxan und Allylpolyether bestehende Reaktionsmischung bei 90°C unter Rühren mit der in Beispiel 1 hergestellten cis-PtCl₂(NH₃)₂-Allylpolyether-Zubereitung (10 ppm Pt bezogen auf den Gesamtansatz) versetzt. Thermischer Umsatz und gasvolumetrischer Umsatz werden, wie im Beispiel 2 beschrieben, bestimmt.

### Beispiel 4 (nicht erfindungsgemäß)

Analog und unter Beibehaltung aller sonstigen Parameter aus Beispiel 2 und 3 werden die Reaktanden im Reaktionskalorimeter unter Rühren auf 90°C erwärmt und dann mit 15,36 mg pulverförmigen cis-PtCl₂(NH₃)₂versetzt. Thermischer Umsatz und gasvolumetrischer Umsatz werden, wie im Beispiel 2 beschrieben, bestimmt.

Fig. 1 fasst die vom Reaktionskalorimeter gemessenen, auf 100% normierten thermischen Umsätze der Beispiele 2, 3 und 4 als Funktion der Reaktionszeit zusammen. Die Umsatzkurven zu den mit erfinderischen cis-PtCl₂(NH₃)₂-Polyether-Zubereitungen katalysierten Reaktionsansätzen (Beispiele 2 und 3) verlaufen bereits in der Anfangsphase der Reaktion deutlich steiler als die Umsatzkurve, die den hier nicht erfindungsgemäßen Einsatz des pulverförmigen cis-PtCl₂(NH₃)₂-Komplexes charakterisiert und kennzeichnen damit eine spontane Exothermie.

Ebenfalls unterstreichen die Verläufe der gasvolumetrisch bestimmten SiH-Umsätze in Fig. 2 (Beispiele 2 und 3) die gesteigerte katalytische Wirksamkeit, der erfindungsgemäßen Polyether Zubereitungen von cis-PtCl₂(NH₃)₂ gegenüber pulverförmig eingesetztem cis-PtCl₂(NH₃)₂.

### Beispiel 5 (erfindungsgemäß):

Herstellung einer cis-Diammino-Platin(II)dichlorid-Katalysatorzubereitung in einem Gemisch bestehend aus einem Allylalkohol gestarteten Polyetherol und einem Butanol gestarteten Polyetherol (dessen gemischtes Molgewicht (nach OH-Zahl berechnet): 2018 g/ mol beträgt und das 90 Gew.-% Ethylenoxid und 10 Gew.-% Propylenoxid mit statistischem Aufbau enthält und dessen Gehalt an olefinischer Unsättigung gemäß hochauflösender ¹H-NMR-Spektroskopie 0,4 mol-% Allyl entsprechend 0,004 meq /g) beträgt.

Zur Herstellung der Zubereitung wurde ein Dispermat der Firma Getzmann ausgerüstet mit einer 2-cm-durchmessenden Dispergierscheibe bei einer Drehzahl von ca. 5500 Umdrehungen pro Minute verwendet. 12 g oben bezeichneten Polyethers wurden im Temperaturbereich von 40 bis 50°C unter obigen Dispergierbedingungen vorgelegt und 3,0 g cis-PtCl₂(NH₃)₂ wurden hinzugefügt. Insgesamt wurde für 15 Minuten dispergiert und danach ließ man die Masse unter weiterem manuellen Rühren mit einem Spatel abkühlen. Erhalten wurde eine sehr gleichmäßig gelb gefärbte, homogene Paste.

### Beispiel 6 (erfindungsgemäß):

Herstellung eines Polyurethan-Weichschaumstabilisators mit Hilfe der in Beispiel 5 hergestellten cis-PtCl₂(NH₃)₂-Polyether-Zubereitung
In einem 500-ml-4-Halskolben mit Rührer, Thermometer und Rückflusskühler wird bei 25°C unter Rühren eine Reaktionsmischung folgender Zusammensetzung vorgelegt:
198 g einer Mischung verschiedener Allylpolyether mit Molgewichten von 600 g/mol bis 3800 g/mol und PO-Anteilen von 0 bis 88 Gew.-% bezogen auf den jeweiligen Polyether, wobei die (gewichts-)mittlere Formel der Polyethermischung

CH₂=CH-CH₂O-(C₂H₄O)₁₆-(C₃H₆O)₁₉-R

ist, mit R = 89 mol-% Me und 11 mol-% H,
und 60 g eines Siloxans mit der durchschnittlichen Formel:

(CH₃)₃SiO-[(CH₃)₂SiO-]_{60,5}-[(CH₃)HSiO-]_{6,5}-Si(CH₃)₃,

(SiH-Wert : 1,263 Val/kg)

Die aus Polyethern und Wasserstoffsiloxan bestehende Reaktionsmatrix ist anfänglich zweiphasig und trübe. Die Reaktionsmischung wird auf 90°C erwärmt und dann mit 20 mg der im Beispiel 5 hergestellten erfindungsgemäßen Katalysatorzubereitung (10 ppm Pt bezogen auf den Gesamtansatz) versetzt. Nach ca. 2,5 Stunden ist gemäß gasvolumetrischer SiH-Bestimmung (Zersetzung einer aliquoten Probe mit Hilfe von Natriumbutylat an einer Gasbürette) quantitativer Umsatz erreicht. Die Viskosität des klaren, leicht gelblichen Polyethersiloxans liegt bei 1424 mPas. Die Viskosität wurde an einem Haake Viscotester VT550 bei 25,00°C unter Nutzung der Rotor NV Messspindel bestimmt. Dieses Instrument ist ein Searle-Rotationsviskosimeter, bei dem der Fließwiderstand der Testsubstanz gegen eine vorgegebene Drehzahl gemessen wird. Aus Drehmoment, Drehzahl und Geometrie der Messeinrichtung werden Viskosität, Schubspannung und Geschwindigkeitsgefälle berechnet.

Die anwendungstechnische Prüfung des so hergestellten Schaumstabilisators erfolgt mit einer Schaumrezeptur auf folgende Weise:
Jeweils 300 Teile eines handelsüblichen Polyethers zur Herstellung von flexiblen Polyurethanschaumstoffen, welcher im mittleren Molekül drei Hydroxylgruppen aufweist und ein Molekulargewicht von 3.500 hat, wird mit 15 Teilen Wasser, 15 Teilen eines üblichen physikalischen Treibmittels, der entsprechenden Menge des zu untersuchenden Schaumstabilisators, 0,33 Teilen Diethylentriamin und 0,69 Teilen Zinnoctoat unter gutem Rühren vermischt. Nach Zugabe von 189 Teilen Toluoldiisocyanat (Isomerengemisch 2,4 und 2,6 im Verhältnis 4 :1) wird mit einem Glattrührer 7 Sekunden bei 2.500 U/Min. gerührt und das Gemisch in einen oben offenen Kasten gegossen. Es entsteht ein feinporiger Schaumstoff, der durch folgende Parameter charakterisiert wird:
1. das Rücksacken des Schaumstoffes am Ende der Steigphase (den sogenannten "Rückfall"),
2. die Zahl der Zellen pro Zentimeter Schaum, die man mikroskopisch ermittelt.

Die Messwerte des Rückfalls für 2 verschiedene Konzentrationen (1,8 Teile/1,5 Teile)sind nachfolgend angegeben:
Rückfall 1,0/1,5 in cm
Porosität 11/8
Raumgewicht: 17,95/ 18,05 kg/ m3
Zellenanzahl pro Zentimeter: 13/ 13

### Beispiel 7 (nicht erfindungsgemäß)

### Herstellung eines Polyurethan-Hartschaumstabilisators

In einem 500 ml 4-Halskolben mit Rührer, Thermometer und Rückflusskühler wird bei 25°C unter Rühren eine Reaktionsmischung folgender Zusammensetzung vorgelegt:
161,3 g eines Polyethers A mit der mittleren Formel:

CH₂=CH-CH₂O-(C₂H₄O)_{13,5}-(C₃H₆O)_{3,6}-H

(Molmasse nach Jodzahl: 824g/ mol) und
60 g eines Wasserstoffsiloxans der allgemeinen Formel:

(CH₃)₃Si-(O-Si(CH₃)₂)_{20,5}-(O-SiH(CH₃))₅-O-Si(CH₃)₃, SiH-Wert 2,51 Val/kg

Diese Reaktionsmatrix wird zügig auf 70°C erwärmt, wobei bei 50°C 1,6 mg festen Di-µ-chloro-bis[chloro(cyclohexen)platins(II)] (Pt 92) entsprechend 4 ppm Pt bezogen auf den Reaktionsansatz hinzugegeben werden. Zwei Stunden wird der Reaktionsansatz bei 70°C gehalten, hernach wird die Reaktionstemperatur auf 90°C erhöht. Nach Zugabe des Platinkomplexes zeigen sich erste, die Flüssigphase durchziehende, schwarze Platinagglomerate Nach 3 Stunden erreicht der gasvolumetrisch bestimmte SiH-Umsatz 80,3% nach 4 Stunden 99,0%. Nach Abkühlen wird ein sehr trübes, von schwarzen, flockenartigen Platinabscheidungen durchsetztes Polyethersiloxan erhalten.

### Beispiel 8 (erfindungsgemäß)

### Herstellung eines Polyurethan-Hartschaumstabilisators

In einem 500-ml-4-Halskolben mit Rührer, Thermometer und Rückflusskühler wird bei 25°C unter Rühren eine Reaktionsmischung folgender Zusammensetzung vorgelegt:
161,3 g eines Polyethers A mit der mittleren Formel:

CH₂=CH-CH₂O-(C₂H₄O)_{13,5}-(C₃H₆O)_{3,6}-H

(Molmasse nach Jodzahl: 824g/ mol) und
60 g eines Wasserstoffsiloxans der allgemeinen Formel:

(CH₃)₃Si-(O-Si(CH₃)₂)_{20,5}-(O-SiH(CH₃))₅-O-Si(CH₃)_{3,} SiH-Wert 2,51 Val/kg

Diese Reaktionsmatrix wird zügig auf 70°C erwärmt, wobei bei 50°C 0,161 g einer zuvor hergestellten, 1 gewichtsprozentigen Di-µ-chloro-bis[chloro(cyclohexen)platin(II)]-Lösung (Pt 92 gelöst in Polyether A) entsprechend 4 ppm Pt bezogen auf den Reaktionsansatz hinzugegeben werden. Nach 2 Stunden bei 70°C und einer weiteren Stunde bei 90°C Reaktionstemperatur ist der gasvolumetrisch bestimmte SiH-Umsatz quantitativ (100%). Nach Abkühlen erhält man ein farbloses, klares Polyethersiloxan, das keinerlei Spuren von Platinabscheidungen aufweist.

### Beispiel 9: Überprüfung der Lagerbeständigkeit

Der Versuch gemäß Beispiel 2 wurde wiederholt, wobei als Katalysator ein Katalysator gemäß Beispiel 5 verwendet wurde, der aber zunächst 3 Monate bei 22°C gelagert wurde. Das Ergebnis dieses Versuchs wird in Tabelle 1 wiedergegeben.

**Tabelle 1: Ergebnisse der Hydrosilylierung als gasvolumetrischer SiH-Umsatz in mol-%**

| SiH-Umsatz nach | Beispiel 2 erfindungsgemäß | Beispiel 9 erfindungsgemäß | Beispiel 4 nicht erfindungsgemäß |
|---|---|---|---|
| 2,5 h | 70,2 % | 70,7 % | 39,7 % |
| 3,5 h | 81,6 % | 75,1 % | 49,1 % |
| 4,5 h | 87,1 % | 81,3 % | 59,1 % |
| 5,5 h | 92,6 % | 86,4 % | 60,9 % |
| 6,5 h | 96,8 % | 90,5 % | 66,9 % |
| Klarpunkt | 57 min | 46 min | 200 min |

### Zum Begriff des Klarpunktes

Die Einbringung der erfindungsgemäßen Zusammensetzung in ein Hydrosilylierungssystem bestehend aus anlagerungsfähigen, ungesättigten Polyethern und einem SiH-Gruppen tragenden Siloxan führt zur Bildung eines Siliconpolyethers, der als Tensid wirkend den weiteren Fortgang in der Hydrosilylierungsmatrix beeinflusst. Alle lösemittelfreien Hydrosilylierungen, die auf die SiC-Verknüpfungsreaktion zwischen SiH-Siloxanen und ungesättigten Polyethern abzielen, beginnen aufgrund der Inkompatibilität von SiH-Siloxan und Polyethern zweiphasig. Mit der im Reaktionsverlauf steigenden Produktkonzentration sinkt die Konzentration inkompatibler Edukte und zugleich wirkt das Siliconpolyether-Copolymer als Tensid, das an der Phasengrenze die Dispergierung verbliebener inkompatibler Edukttröpchen speziell von SiH-Siloxanen und auch den partiell umgesetzten SiH-Siloxanen in der Polyethermatrix fördert. Der bei der SiCverknüpfenden Herstellung von Siliconpolyethern beobachtbare Klarpunkt ist Indikator und Konsequenz dieser im Reaktionssystem zunehmend stattfindenden Phasendispergierung. Am Klarpunkt hat der Durchmesser der individuellen Tröpfchen der inkompatiblen dispergierten Phase die Wellenlänge sichtbaren Lichts unterschritten und die zuvor trübe Reaktionsmatrix erscheint dem unbewaffneten Auge als eine klare Phase.

Wie der Tabelle 1 entnommen werden kann, werden bei Einsatz des Katalysators in Form der erfindungsgemäßen Zusammensetzung die besten Umsätze erzielt. Selbst eine Lagerung über 3 Monate bei Raumtemperatur (Beispiel 9) zeigt keine wesentliche Änderung der Katalysatoraktivität.

### Beispiel 10: (erfindungsgemäß)

### Herstellung eines Lackadditivs im Technikum

50,00 kg eines α,ω-Dihydrogenpolydimethylsiloxans der mittleren Gesamtkettenlänge N = 30 mit einem SiH-Gehalt von 0,87 val/ kg werden in einem 120-I-Technikumsreaktor unter N₂-Inertisierung und Rühren auf 80°C erhitzt. In 60,6 g Vinyl-4-hydroxybutylether werden zunächst 973,8 mg festen Di-µ-chloro-bis[chloro(cyclohexen)platins(II)] (Pt 92) (entsprechend 10 ppm Pt bezogen auf den Gesamtansatz) eingerührt, dann wird diese Pt-Zusammensetzung gemeinsam mit 553,1 g Na₂CO₃ zu dem unter Rühren vorgelegten Siloxan gegeben. 5 Minuten nach dieser Zugabe werden 5,246 kg Vinyl-4-hydroxybutylether im Laufe von 20 Minuten hinzugetropft, wobei die einsetzende SiC-Verknüpfungsreaktion die Temperatur des Reaktionsgemisches auf 98°C steigen lässt.

Nach 2,5 Stunden Gesamtreaktionszeit wird ein gasvolumetrisch bestimmter SiH-Umsatz von 99,4% erreicht. Man entfernt destillativ bei 140°C und unter Anlegen eines Hilfsvakuums von 22 mbar 1,125 kg Flüchtige, versetzt nach Abkühlen des Sumpfes diesen mit 55,3 g Butylethanolamin und mit 0,5% Bentonit und lässt 30 Minuten nachrühren bevor man über eine K 300 Filterscheibe filtriert. Erhalten wird ein klares, nahezu farbloses Produkt, das eine Viskosität von 82,1 mPas bei 25°C besitzt.

## Patentansprüche

1. Zusammensetzung enthaltend elementares Platin und/oder mindestens eine platinhaltige Verbindung, bei der das Platin eine positive Wertigkeit aufweist, und eine oder mehrere, organische, Kohlenstoffatome, Wasserstoffatome und mindestens zwei Sauerstoffatome aufweisende Verbindungen, wobei mindestens eine der Verbindungen mindestens eine olefinische Unsättigung aufweist, **dadurch gekennzeichnet, dass** die Zusammensetzung einen Anteil an organischen, Kohlenstoffatome, Wasserstoffatome und mindestens zwei Sauerstoffatome aufweisenden Verbindungen von 50,0 bis 99,9 Gew.-% und einen Anteil an der Summe aus elementarem Platin und platinhaltigen Verbindungen von 0,1 bis 50,0 Gew.-% jeweils bezogen auf die Zusammensetzung aufweist, mit der Maßgabe, dass die Summe der Anteile an organischen, Kohlenstoffatome, Wasserstoffatome und mindestens zwei Sauerstoffatome aufweisenden Verbindungen, elementarem Platin und platinhaltigen Verbindungen mindestens 90 Gew.-% bezogen auf die Zusammensetzung beträgt und der Massgabe, dass der Gehalt an olefinischer Unsättigung mindestens 0,1 g Jod/ 100 g der organischen, Kohlenstoffatome, Wasserstoffatome und mindestens zwei Sauerstoffatome aufweisenden Verbindungen, entsprechend mindestens 0,004 meq/ g beträgt, bestimmt durch die in der Beschreibung erwähnte Methode.

2. Zusammensetzung nach Anspruch 1, **dadurch gekennzeichnet, dass** als platinhaltige Verbindung, bei der das Platin eine positive Wertigkeit aufweist, mindestens eine Platin (II) Verbindung vorhanden ist.

3. Zusammensetzung nach Anspruch 1 oder 2, **dadurch gekennzeichnet, dass** als organische, Kohlenstoffatome, Wasserstoffatome und mindestens zwei Sauerstoffatome aufweisende Verbindung(en) solche der Formel I
A[-O-(CH₂-CHR'-O-)ₘ-(CH₂-CH₂-O-)ₙ-(CH₂-CH(CH₃)-O-)ₒ-Z]ₐ (I)
mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung,
R' unabhängig voneinander eine gesättigte Alkylgruppe mit 2-18 C-Atomen ist oder ein aromatischer Rest, respektive bevorzugt eine Ethylgruppe oder ein Phenylrest,
Z entweder Wasserstoff, ein linearer oder verzweigter, gesättigter oder ungesättigter Kohlenwasserstoffrest mit 1-18 C-Atomen bevorzugt eine Methyl-, Ethyl-, Propyl-, Butyl-, Vinyl-, Allylgruppe ist, oder
der Rest einer organischen Säure der Formel -C(=O)-Z_{E}, wobei Z_{E} ein organischer Rest, bevorzugt ein linearer oder verzweigter, gesättigter oder olefinisch ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-Z_{c} ist, wobei Zc ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4.
mit der Maßgabe, dass die Summe aus m, n und o gleich oder größer als 1 ist, vorhanden sind.

4. Zusammensetzung nach Anspruch 3, **dadurch gekennzeichnet, dass** als organische, Kohlenstoffatome, Wasserstoffatome und mindestens zwei Sauerstoffatome aufweisende Verbindung(en), die mindestens eine olefinische Unsättigung aufweisen, solche Verbindungen der Formel (I) vorhanden sind, bei denen A und/oder Z einen olefinisch ungesättigten Rest aufweisen.

5. Zusammensetzung nach mindestens einem der Ansprüche 3 oder 4, worin die Verbindungen der Formel (I) eine gewichtsmittlere Molmasse von 76 bis 10.000 g/mol, bevorzugt von 100 bis 8.000 g/mol und besonders bevorzugt von 200 bis 6.000 g/mol aufweisen, wobei die Molmasse wird durch die in der Beschreibung erwähnte Methode bestimmt. .

6. Zusammensetzung nach mindestens einem der Ansprüche Anspruch 3 bis 5, worin der organische Rest A ein Rest ist, der aus einer Verbindung der Formel (II)
A[-OH]ₐ (II)
hervorgegangen ist.

7. Zusammensetzung nach mindestens einer der Ansprüche 3 bis 6, worin der Rest A sich aus Verbindungen ableitet ausgewählt aus der Gruppe der ein- oder mehrwertigen monomeren, oligomeren oder polymeren Alkohole, Phenole, Kohlenhydrate oder Kohlenhydratderivate.

8. Zusammensetzung nach Anspruch 7, **dadurch gekennzeichnet, dass** Mischungen von Verbindungen der Formel (I) vorliegen, die unterschiedliche Reste A und/oder Z aufweisen.

9. Zusammensetzung nach mindestens einer der Ansprüche 3 bis 8, worin der Rest A sich ableitet von einem oder mehreren Alkoholen aus der Gruppe von Allylalkohol, Vinylalkohol, Butanol, 1-Hexenol, Octanol, Dodecanol, Stearylalkohol, Vinyloxybutanol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit oder von auf Naturstoffen basierenden, Hydroxylgruppen tragenden Verbindungen.

10. Zusammensetzung nach mindestens einem der Ansprüche 3 bis 9, **dadurch gekennzeichnet, dass** als organische, Kohlenstoffatome, Wasserstoffatome und mindestens zwei Sauerstoffatome aufweisende olefinisch ungesättigte Verbindung Allyloxyethanol, Vinylhydroxybutanol, oder ein Allylalkohol gestarteter Polyether vorhanden ist.

11. Zusammensetzung nach mindestens einem der Ansprüche 1 bis 10, **dadurch gekennzeichnet, dass** als platinhaltige Verbindung cis-(NH₃)₂PtCl₂ vorhanden ist.

12. Zusammensetzung nach mindestens einem der Ansprüche 1 bis 11, **dadurch gekennzeichnet, dass** als platinhaltige Verbindung di-µ-Chlorobis(1,2-η)cyclohexenplatin(II)chlorid vorhanden ist.

13. Zusammensetzung nach mindestens einem der Ansprüche 1 bis 12, **dadurch gekennzeichnet, dass** der Anteil an organischen, Kohlenstoffatome, Wasserstoffatome und mindestens zwei Sauerstoffatome aufweisenden Verbindungen von 75 bis 99,7 Gew.-% und der Anteil an der Summe aus elementarem Platin und platinhaltigen Verbindungen von 0,3 bis 25 Gew.-% jeweils bezogen auf die Zusammensetzung beträgt.

14. Verfahren zur Herstellung einer Zusammensetzung nach einem der Ansprüche 1 bis 13, **dadurch gekennzeichnet, dass** eine oder mehrere organische, Kohlenstoffatome, Wasserstoffatome und mindestens zwei Sauerstoffatome aufweisende Verbindungen, wobei mindestens eine der Verbindungen eine olefinische Unsättigung aufweist, und der Gehalt an olefinischer Unsättigung mindestens 0,1 g Jod/ 100 g der organischen, Kohlenstoffatome, Wasserstoffatome und mindestens zwei Sauerstoffatome aufweisenden Verbindungen, entsprechend mindestens 0,004 meq/ g beträgt, in einem Gefäß vorgelegt wird, welches mit einem Rührer, vorzugsweise einer Dispergierscheibe, ausgestattet ist, und unter Rühren pulverförmiges Platin und/oder eine oder mehrere pulverförmige, platinhaltige Verbindungen zugegeben wird/werden, wobei die eingesetzte Menge an pulverförmiges Platin und/oder eine oder mehrere pulverförmige, platinhaltige Verbindungen so gewählt wird, dass die Zusammensetzung einen Anteil an organischen, Kohlenstoffatome, Wasserstoffatome und mindestens zwei Sauerstoffatome aufweisenden Verbindungen von 50,0 bis 99,9 Gew.-% und einen Anteil an der Summe aus elementarem Platin und platinhaltigen Verbindungen von 0,1 bis 50,0 Gew.-% jeweils bezogen auf die Zusammensetzung aufweist.

15. Verfahren nach Anspruch 14, **dadurch gekennzeichnet, dass** das pulverförmige Platin und/oder die pulverförmige platinhaltige Verbindung mit der/den organischen, Kohlenstoffatome, Wasserstoffatome und mindestens zwei Sauerstoffatome aufweisenden aliphatischen Verbindung/en oder der in dem Gefäß vorhandenen flüssigen Zusammensetzung in das Gefäß gespült wird.

16. Verfahren nach Anspruch 14 oder 15, **dadurch gekennzeichnet, dass** das Zugeben des pulverförmigen Platins und/oder der pulverförmigen platinhaltigen Verbindung bei einer Temperatur im Gefäß von 30 bis 75 °C erfolgt.

17. Verfahren nach mindestens einem der Ansprüche 14 bis 16, **dadurch gekennzeichnet, dass** als Gefäß ein Kugelgefäß zum Einsatz kommt, welches mit einem seitlichen Stutzen ausgestattet ist, über welchen das pulverförmige Platin und/oder die pulverförmige platinhaltige Verbindung zugegeben wird.

18. Verfahren nach mindestens einem der Ansprüche 14 bis 17, **dadurch gekennzeichnet, dass** das Gefäß einen seitlichen Stutzen mit einem drehbaren Anschluss aufweist, mit dem ein Behälter, welcher das pulverförmige Platin und/oder die pulverförmige platinhaltige Verbindung enthält, angeschlossen und zur Entleerung so gedreht werden kann, dass der Inhalt durch Schwerkraft in das Gefäß rutschen kann.

19. Verwendung einer Zusammensetzung nach einem der Ansprüche 1 bis 13 als Katalysator in einem Verfahren, bei dem H-Si-Gruppen aufweisende Verbindungen mit Verbindungen, die olefinische Doppelbindungen aufweisen, umgesetzt werden.

20. Verwendung nach Anspruch 19, **dadurch gekennzeichnet, dass** in dem Verfahren als H-Si-Gruppen tragende Verbindungen
- monomere Silane, wie z.B. R₃SiH; R₂SiH₂; RSiH₃;
- cyclische Silane, wie z.B. (RHSiO}₄; (RHSiO}₃;
- lineare oder verzweigte oligomere oder polymere Siloxane wie R₃SiO-(R₂SiO-)ₐ(RSi(H)O-)_{b}SiR₃, wobei a ≥ 0 und b ≥ 1 ist; HR₂SiO-(R₂SiO-}_{c}(RSi(H)O-)_{d}SiR₂H, wobei c und d ≥ O sind;
Verbindungen der allgemeinen Formel (III) 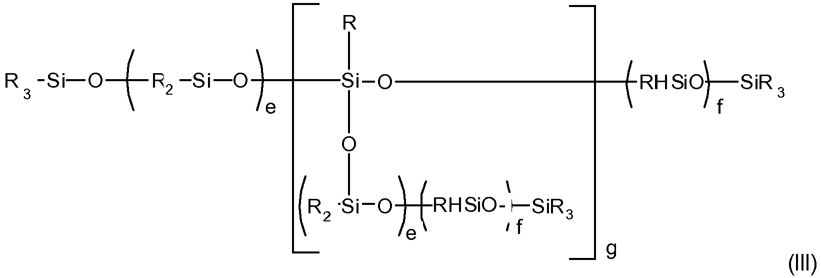 worin
e = ≥ 0,
f = ≥ 1 und
g = ≥ 1 ist,
R gleiche oder verschiedene Gruppen sind, die die Anlagerungsreaktion nicht behindern, wie Alkylgruppen mit 1 bis 8 Kohlenstoffatomen; substituierte Alkylgruppen mit 1 bis 8 Kohlenstoffatomen, wie die 3-Chlorpropyl-, 1-Chlormethyl-, 3-Cyanopropylgruppe; Arylgruppen, wie die Phenylgruppe; Aralkylgruppen, wie die Benzylgruppe; Alkoxy- oder Alkoxyalkylgruppen, wie die Ethoxy- oder Ethoxypropylgruppe, eingesetzt werden.

21. Verwendung nach Anspruch 19 oder 20, **dadurch gekennzeichnet, dass** in dem Verfahren als Verbindungen mit olefinischen Doppelbindungen Verbindungen der Formeln
CH₂=CH-CH₂-O-(CH₂-CH₂O-)ₓ-(CH₂-CH(R")O-)_{y}-(SO)_{z}-R"'
CH₂=CH-O-(CH₂-CH₂O-)ₓ-(CH₂-CH(R")O-)_{y}-R'"
CH₂=CH-CH₂-R^{IV}
CH₂=CH-(O)_{x'}-R^{IV}
worin
x = 0 bis 100,
x'= 0 oder 1,
y = 0 bis 100,
z = 0 bis 100,
R" eine gegebenenfalls substituierte Alkylgruppe mit 1 bis 4 C-Atomen ist und
R'" einen Wasserstoffrest oder eine Alkylgruppe mit 1 bis 4 C-Atomen; die Gruppe - C(O)-R^{v} mit R^{V} = Alkylrest;
die Gruppe -CH₂-O-R"; eine Alkylarylgruppe, wie die Benzylgruppe; die Gruppe -C(O)NH-R" bedeutet,
R^{IV} ein gegebenenfalls substituierter Kohlenwasserstoffrest mit 7 bis 47, vorzugsweise 13 bis 37 C-Atomen,
SO der Rest C₆H₅-CH(-)-CH₂-O- (Styroloxidrest) bedeutet,
eingesetzt werden.

22. Verwendung nach mindestens einem der Ansprüche 19 bis 21, **dadurch gekennzeichnet, dass** soviel an der Zusammensetzung dem Reaktionsgemisch zugegeben wird, dass die Gesamtkonzentration an Platin von 1 bis 100 wppm bezogen auf das Reaktionsgemisch beträgt.

## Claims

1. Composition comprising elemental platinum and/or at least one platinum-containing compound, where said platinum has a positive oxidation state, and one or more organic compounds comprising carbon atoms, hydrogen atoms and at least two oxygen atoms, wherein at least one of said compounds comprises at least one olefinic unsaturation, **characterized in that** said composition comprises a proportion of organic compounds comprising carbon atoms, hydrogen atoms and at least two oxygen atoms of from 50.0 to 99.9 wt% and a proportion of the sum of elemental platinum and platinum-containing compounds of from 0.1 to 50.0 wt% in each case based on the composition, with the proviso that the proportions of organic compounds comprising carbon atoms, hydrogen atoms and at least two oxygen atoms and of elemental platinum and platinum-containing compounds sum to at least 90 wt% based on the composition and the proviso that the olefinic unsaturation content is at least 0.1 g of iodine/100 g of the organic compounds comprising carbon atoms, hydrogen atoms and at least two oxygen atoms, corresponding to at least 0.004 meq/g, determined by the method recited in the description.

2. Composition according to Claim 1, **characterized in that** it comprises at least one platinum(II) compound as platinum-containing compound where said platinum has a positive oxidation state.

3. Composition according to either of Claims 1 and 2, **characterized in that** it comprises, as organic compound(s) comprising carbon atoms, hydrogen atoms and at least two oxygen atoms, those of formula I
A[-O-(CH₂-CHR'-O-)ₘ-(CH₂-CH₂-O-)ₙ-(CH₂-CH(CH₃)-O-)ₒ-Z]ₐ (I)
where
A is either hydrogen or an at least one carbon atom-comprising saturated or unsaturated organic radical, preferably an at least one carbon atom-comprising organic radical of an organic starter compound for preparing the compound,
R' is independently for each occurrence a saturated 2-18 carbon atom-comprising alkyl group or an aromatic radical, preferably an ethyl group or a phenyl radical respectively,
Z is either hydrogen, a linear or branched, saturated or unsaturated 1-18 carbon atom-comprising hydrocarbon radical, preferably a methyl, ethyl, propyl, butyl, vinyl, allyl group, or
the radical of an organic acid of formula -C(=O)-Z_{E}, where Z_{E} is an organic radical, preferably a linear or branched, saturated or olefinically unsaturated 1 to 17 carbon atom-comprising hydrocarbon radical, preferably a methyl group, or an aromatic 6 to 20 carbon atom-comprising hydrocarbon radical, preferably a phenyl radical, or
the radical of formula -C(=O)-O-Z_{c}, where Z_{c} is an organic radical, preferably a linear or branched, saturated or olefinically unsaturated 1 to 18 carbon atom-comprising hydrocarbon radical, preferably a methyl group, ethyl group, or an aromatic 6 to 20 carbon atom-comprising hydrocarbon radical, preferably a phenyl radical,
m is from 0 to 50, preferably from 0 to 30, more preferably from 0 to 20,
n is from 0 to 250, preferably from 3 to 220, more preferably from 5 to 200,
o is from 0 to 250, preferably from 3 to 220, more preferably from 5 to 200,
a is from 1 to 8, preferably from greater than 1 to 6, more preferably 1, 2, 3 or 4,
with the proviso that m, n and o sum to no less than 1.

4. Composition according to Claim 3, **characterized in that** it comprises, as organic compound(s) comprising carbon atoms, hydrogen atoms and at least two oxygen atoms, which compounds comprise at least one olefinic unsaturation, compounds of formula (I) where A and/or Z comprise an olefinically unsaturated radical.

5. Composition according to at least one of Claims 3 and 4, wherein the compounds of formula (I) have a weight average molar mass of from 76 to 10 000 g/mol, preferably from 100 to 8000 g/mol and more preferably from 200 to 6000 g/mol, wherein the molar mass is determined by the method recited in the description.

6. Composition according to at least one of Claims 3 to 5, wherein the organic radical A is a radical derived from a compound of formula (II)
A[-OH]ₐ (II).

7. Composition according to at least one of Claims 3 to 6, wherein the radical A derives from compounds selected from the group consisting of mono- and polyfunctional monomeric, oligomeric and polymeric alcohols, phenols, carbohydrates and carbohydrate derivatives.

8. Composition according to Claim 7, **characterized in that** it comprises mixtures of compounds of formula (I) comprising different radicals A and/or Z.

9. Composition according to at least one of Claims 3 to 8, wherein the radical A is derived from one or more alcohols from the group consisting of allyl alcohol, vinyl alcohol, butanol, 1-hexenol, octanol, dodecanol, stearyl alcohol, vinyloxybutanol, 2-ethylhexanol, cyclohexanol, benzyl alcohol, ethylene glycol, propylene glycol, di-, tri- and polyethylene glycol, 1,2-propylene glycol, di- and polypropylene glycol, 1,4-butanediol, 1,6-hexanediol, trimethylolpropane, glycerol, pentaerythritol, sorbitol and hydroxyl group-bearing compounds based on natural products.

10. Composition according to at least one of Claims 3 to 9, **characterized in that** it comprises allyloxyethanol, vinylhydroxybutanol or an allyl alcohol-started polyether as olefinically unsaturated organic compound comprising carbon atoms, hydrogen atoms and at least two oxygen atoms.

11. Composition according to at least one of Claims 1 to 10, **characterized in that** it comprises cis-(NH₃)₂PtCl₂ as platinum-containing compound.

12. Composition according to at least one of Claims 1 to 11, **characterized in that** it comprises di-µ-chlorobis(1,2-η)cyclohexeneplatinum(II) chloride as platinum-containing compound.

13. Composition according to at least one of Claims 1 to 12, **characterized in that** the proportion of organic compounds comprising carbon atoms, hydrogen atoms and at least two oxygen atoms is from 75 to 99.7 wt% and the proportion of the sum of elemental platinum and platinum-containing compounds is from 0.3 to 25 wt% in each case based on the composition.

14. Process for preparing a composition according to any one of Claims 1 to 13, **characterized in that** one or more organic compounds comprising carbon atoms, hydrogen atoms and at least two oxygen atoms, wherein at least one of said compounds comprises an olefinic unsaturation and the olefinic unsaturation content is at least 0.1 g of iodine/100 g of the organic compounds comprising carbon atoms, hydrogen atoms and at least two oxygen atoms, corresponding to at least 0.004 meq/g, are initially charged into a vessel fitted with a stirrer, preferably a dispersing disc, and pulverulent platinum and/or one or more pulverulent, platinum-containing compounds is/are added with stirring, wherein the amount of pulverulent platinum and/or one or more pulverulent, platinum-containing compounds used is chosen such that the composition comprises a proportion of organic compounds comprising carbon atoms, hydrogen atoms and at least two oxygen atoms of from 50.0 to 99.9 wt% and a proportion of the sum of elemental platinum and platinum-containing compounds of from 0.1 to 50.0 wt% in each case based on the composition.

15. Process according to Claim 14, **characterized in that** the pulverulent platinum and/or the pulverulent platinum-containing compound are washed into the vessel with the organic aliphatic compound(s) comprising carbon atoms, hydrogen atoms and at least two oxygen atoms or with the liquid composition present in the vessel.

16. Process according to either of Claims 14 and 15, **characterized in that** the addition of the pulverulent platinum and/or the pulverulent platinum-containing compound is effected at a temperature in the vessel of from 30°C to 75°C.

17. Process according to at least one of Claims 14 to 16, **characterized in that** the vessel employed is a spherical vessel fitted with a lateral port by means of which the pulverulent platinum and/or the pulverulent platinum-containing compound are added.

18. Process according to at least one of Claims 14 to 17, **characterized in that** the vessel comprises a lateral port with a rotatable connection with which a container containing the pulverulent platinum and/or the pulverulent platinum-containing compound can be connected and, for emptying, rotated such that the contents can feed into the vessel under gravity.

19. Use of a composition according to any of Claims 1 to 13 as catalyst in a process where compounds comprising H-Si groups are reacted with compounds comprising olefinic double bonds.

20. Use according to Claim 19, **characterized in that** the H-Si group-bearing compounds employed in the process are
- monomeric silanes, for example R₃SiH; R₂SiH₂; RSiH₃;
- cyclic silanes, for example (RHSiO}₄; (RHSiO}₃;
- linear or branched oligomeric or polymeric siloxanes such as R₃SiO-(R₂SiO-)ₐ(RSi(H)O-)_{b}SiR₃, where a ≥ 0 and b ≥ 1;
HR₂SiO-(R₂SiO-}_{c}(RSi(H)O-)_{d}SiR₂H, where c and d ≥ 0;
compounds of general formula (III) 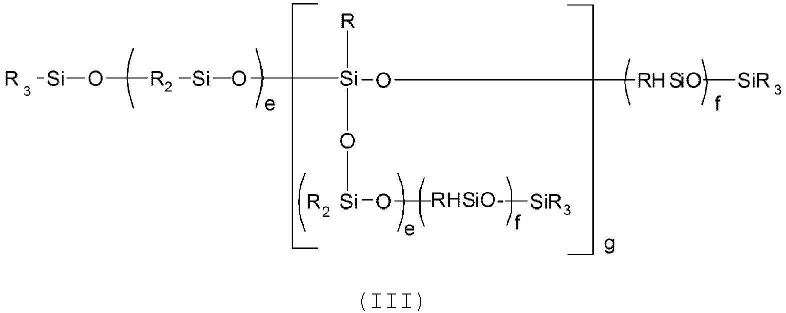 where
e = ≥ 0,
f = ≥ 1 and
g = ≥ 1,
R are identical or different groups that do not impede the addition reaction, such as 1 to 8 carbon atom-comprising alkyl groups; substituted 1 to 8 carbon atom-comprising alkyl groups, such as a 3-chloropropyl group, 1-chloromethyl group, 3-cyanopropyl group; aryl groups, such as a phenyl group; aralkyl groups, such as a benzyl group; alkoxy or alkoxyalkyl groups, such as an ethoxy or ethoxypropyl group.

21. Use according to either of Claims 19 and 20, **characterized in that** the compounds comprising olefinic double bonds employed in the process are compounds having the formulae
CH₂=CH-CH₂-O-(CH₂-CH₂O-)ₓ-CH₂-CH(R'')O-)_{y}-(SO)_{z}-R'''
CH₂=CH-O-(CH₂-CH₂O-)ₓ-CH₂-CH(R'')O⁻)_{y}-R'''
CH₂=CH-CH₂-R^{IV}
CH₂=CH-(O)_{x'}-R^{IV}
where
x = 0 to 100,
x' = 0 or 1,
y = 0 to 100,
z = 0 to 100,
R'' is an optionally substituted 1 to 4 carbon atom-comprising alkyl group and
R''' is a hydrogen radical or a 1 to 4 carbon atom-comprising alkyl group; the group -C(O)-R^{v} where R^{v} = alkyl radical;
the group -CH₂-O-R''; an alkylaryl group, such as a benzyl group; the group -C(O)NH-R",
R^{IV} is an optionally substituted hydrocarbon radical comprising from 7 to 47, preferably from 13 to 37, carbon atoms,
SO is the radical C₆H₅-CH (-) -CH₂-O- (styrene oxide radical) .

22. Use according to at least one of Claims 19 to 21, **characterized in that** it comprises adding an amount of the composition to the reaction mixture such that the total concentration of platinum is from 1 to 100 wppm based on the reaction mixture.

## Revendications

1. Composition contenant du platine élémentaire et/ou au moins un composé contenant du platine, dans lequel le platine présente une valence positive, et un ou plusieurs composés organiques présentant des atomes de carbone, des atomes d'hydrogène et au moins deux atomes d'oxygène, au moins un des composés présentant au moins une insaturation oléfinique, **caractérisée en ce que** la composition présente une proportion de composés organiques présentant des atomes de carbone, des atomes d'hydrogène et au moins deux atomes d'oxygène de 50,0 à 99,9 % en poids et une proportion de la somme du platine élémentaire et des composés contenant du platine de 0,1 à 50,0 % en poids à chaque fois par rapport à la composition, étant entendu que la somme des proportions des composés organiques présentant des atomes de carbone, des atomes d'hydrogène et au moins deux atomes d'oxygène, du platine élémentaire et des composés contenant du platine est d'au moins 90 % en poids par rapport à la composition et étant entendu que la teneur en insaturation oléfinique est d'au moins 0,1 g d'iode/100 g des composés organiques présentant des atomes de carbone, des atomes d'hydrogène et au moins deux atomes d'oxygène, correspondant à au moins 0,004 méq/g, déterminée par la méthode évoquée dans la description.

2. Composition selon la revendication 1, **caractérisée en ce qu'**en tant que composé contenant du platine, dans lequel le platine présente une valence positive, au moins un composé de platine (II) est présent.

3. Composition selon la revendication 1 ou 2, **caractérisée en ce qu'**en tant que composé(s) organique(s) présentant des atomes de carbone, des atomes d'hydrogène et au moins deux atomes d'oxygène, ceux de formule I
A[-O-(CH₂-CHR'-O-)ₘ-(CH₂-CH₂-O-)ₙ-(CH₂-CH(CH₃)-O-)ₒ-Z]ₐ (I)
avec
A étant soit hydrogène, soit un radical organique saturé ou insaturé présentant au moins un atome de carbone, préférablement un radical organique présentant au moins un atome de carbone d'un composé organique de départ pour la préparation du composé,
R', indépendamment les uns des autres, étant un groupe alkyle saturé comportant 2 à 18 atomes de C ou un radical aromatique, respectivement préférablement un groupe éthyle ou un groupe phényle,
Z étant soit hydrogène, soit un radical hydrocarboné linéaire ou ramifié, saturé ou insaturé comportant 1 à 18 atome(s) de C, préférablement étant un groupe méthyle, éthyle, propyle, butyle, vinyle, allyle, soit
le radical d'un acide organique de formule -C(=O)-Z_{E}, Z_{E} étant un radical organique, préférablement un radical hydrocarboné linéaire ou ramifié, saturé ou oléfiniquement insaturé comportant 1 à 17 atome(s) de C, préférablement étant un groupe méthyle, soit un radical hydrocarboné aromatique comportant 6 à 20 atomes de C, préférablement étant un radical phényle, soit
le radical de formule -C(=O)-O-Z_{c}, Z_{c} étant un radical organique, préférablement un radical hydrocarboné linéaire ou ramifié, saturé ou oléfiniquement insaturé comportant 1 à 18 atome(s) de C, préférablement étant un groupe méthyle, éthyle, soit un radical hydrocarboné aromatique comportant 6 à 20 atomes de C, préférablement un radical phényle,
m valant 0 à 50, préférablement 0 à 30, particulièrement préférablement 0 à 20
n valant 0 à 250, préférablement 3 à 220, particulièrement préférablement 5 à 200
o valant 0 à 250, préférablement 3 à 220, particulièrement préférablement 5 à 200
a valant 1 à 8, préférablement plus de 1 à 6, particulièrement préférablement 1, 2, 3 ou 4,
étant entendu que la somme de m, n et o est supérieure ou égale à 1,
sont présents.

4. Composition selon la revendication 3, **caractérisée en ce qu'**en tant que composé(s) organique(s) présentant des atomes de carbone, des atomes d'hydrogène et au moins deux atomes d'oxygène, qui présente (nt) au moins une insaturation oléfinique, de tels composés de formule (I) sont présents, dans lesquels A et/ou Z présente(nt) un radical oléfiniquement insaturé.

5. Composition selon au moins l'une des revendications 3 et 4, dans laquelle les composés de formule (I) présentent une masse molaire moyenne en poids de 76 à 10 000 g/mole, préférablement de 100 à 8 000 g/mole et particulièrement préférablement de 200 à 6 000 g/mole, la masse molaire étant déterminée par la méthode évoquée dans la description.

6. Composition selon au moins l'une des revendications 3 à 5, dans laquelle le radical organique A est un radical qui est issu d'un composé de formule (II)
**A[-OH]ₐ** **(II).**

7. Composition selon au moins l'une des revendications 3 à 6, le radical A étant dérivé de composés choisis dans le groupe des alcools, des phénols, des glucides ou des dérivés de glucides monovalents ou polyvalents, monomériques, oligomériques ou polymériques.

8. Composition selon la revendication 7, **caractérisée en ce que** des mélanges de composés de formule (I) sont présents, qui présentent différents radicaux A et/ou Z.

9. Composition selon au moins l'une des revendications 3 à 8, le radical A étant dérivé d'un ou plusieurs alcools du groupe de l'alcool allylique, l'alcool vinylique, le butanol, le 1-hexénol, l'octanol, le dodécanol, l'alcool stéarique, le vinyloxybutanol, le 2-éthylhexanol, le cyclohexanol, l'alcool benzylique, l'éthylèneglycol, le propylèneglycol, le diéthylèneglycol, le triéthylèneglycol et le polyéthylèneglycol, le 1,2-propylèneglycol, le dipropylèneglycol et le polypropylèneglycol, le 1,4-butanediol, le 1,6-hexanediol, le triméthylolpropane, la glycérine, le pentaérythritol, le sorbitol ou de composés portant des groupes hydroxyle à base de produits naturels.

10. Composition selon au moins l'une des revendications 3 à 9, **caractérisée en ce qu'**en tant que composé organique oléfiniquement insaturé présentant des atomes de carbone, des atomes d'hydrogène et au moins deux atomes d'oxygène, l'allyloxyéthanol, le vinylhydroxybutanol ou un polyéther amorcé avec l'alcool allylique est présent.

11. Composition selon au moins l'une des revendications 1 à 10, **caractérisée en ce qu'**en tant que composé contenant du platine, le cis-(NH₃)₂PtCl₂ est présent.

12. Composition selon au moins l'une des revendications 1 à 11, **caractérisée en ce qu'**en tant que composé contenant du platine, le chlorure de di-µ-chlorobis(1,2-η)cyclohexèneplatine(II) est présent.

13. Composition selon au moins l'une des revendications 1 à 12, **caractérisée en ce que** la proportion en composés organiques présentant des atomes de carbone, des atomes d'hydrogène et au moins deux atomes d'oxygène est de 75 à 99,7 % en poids et la proportion de la somme du platine élémentaire et des composés contenant du platine est de 0,3 à 25 % en poids à chaque fois par rapport à la composition.

14. Procédé pour la préparation d'une composition selon l'une quelconque des revendications 1 à 13, **caractérisé en ce qu'**un ou plusieurs composés organiques présentant des atomes de carbone, des atomes d'hydrogène et au moins deux atomes d'oxygène, au moins un des composés présentant une insaturation oléfinique, et la teneur en insaturation oléfinique étant d'au moins 0,1 g d'iode/100 g des composés organiques présentant des atomes de carbone, des atomes d'hydrogène et au moins deux atomes d'oxygène, correspondant à au moins 0,004 méq/g, sont placés dans une cuve qui est équipée d'un agitateur, de préférence d'un disque de dispersion, et sous agitation, du platine sous forme de poudre et/ou un ou plusieurs composés sous forme de poudre, contenant du platine est/sont ajouté(s), la quantité utilisée de platine sous forme de poudre et/ou du ou des composés sous forme de poudre, contenant du platine, étant choisie de telle manière que la composition présente une proportion en composés organiques présentant des atomes de carbone, des atomes d'hydrogène et au moins deux atomes d'oxygène de 50,0 à 99,9 % en poids et une proportion de la somme du platine élémentaire et des composés contenant du platine de 0,1 à 50,0 % en poids à chaque fois par rapport à la composition.

15. Procédé selon la revendication 14, **caractérisé en ce que** le platine sous forme de poudre et/ou le composé sous forme de poudre, contenant du platine est rincé dans la cuve avec le(s) composé(s) aliphatique(s) organique(s) présentant des atomes de carbone, des atomes d'hydrogène et au moins deux atomes d'oxygène ou avec la composition liquide présente dans la cuve.

16. Procédé selon la revendication 14 ou 15, **caractérisé en ce que** l'ajout du platine sous forme de poudre et/ou du composé sous forme de poudre, contenant du platine, est réalisé à une température dans la cuve de 30 à 75 °C.

17. Procédé selon au moins l'une des revendications 14 à 16, **caractérisé en ce qu'**en tant que cuve, une cuve sphérique est utilisée, qui est équipée d'une buse latérale, par l'intermédiaire de laquelle le platine sous forme de poudre et/ou le composé sous forme de poudre, contenant du platine est ajouté.

18. Procédé selon au moins l'une des revendications 14 à 17, **caractérisé en ce que** la cuve présente une buse latérale dotée d'un raccordement rotatif avec lequel un récipient, qui contient le platine sous forme de poudre et/ou le composé sous forme de poudre, contenant du platine, peut être raccordé et mis en rotation pour le vidage de telle manière que le contenu peut glisser par gravitation dans la cuve.

19. Utilisation d'une composition selon l'une quelconque des revendications 1 à 13 en tant que catalyseur dans un procédé dans lequel des composés présentant des groupes Si-H sont transformés avec des composés qui présentent des doubles liaisons oléfiniques.

20. Utilisation selon la revendication 19, **caractérisée en ce que** dans le procédé, en tant que composés portant des groupes Si-H,
- des silanes monomériques, comme par ex. R₃SiH ; R₂SiH₂ ; RSiH₃ ;
- des silanes cycliques, par ex. (RHSiO}₄ ; (RHSiO}₃ ;
- des siloxanes linéaires ou ramifiés, oligomériques ou polymériques comme R₃SiO- (R₂SiO-)ₐ(RSi(H)O⁻)_{b}SiR₃, avec a ≥ 0 et b ≥ 1 ;
HR₂SiO- (R₂SiO-}_{c} (RSi(H)O-)_{d}SiR₂H, avec c et d ≥ 0 ;
des composés de formule générale (III) 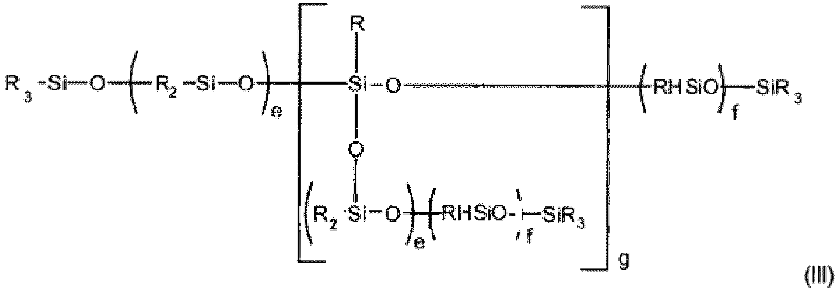 dans laquelle
e = ≥ 0,
f = ≥ 1 et
g = ≥ 1,
R sont des groupes identiques ou différents, qui ne gênent pas la réaction d'addition, comme des groupes alkyle comportant 1 à 8 atome(s) de carbone ; des groupes alkyle substitués comportant 1 à 8 atome(s) de carbone, comme le groupe 3-chloropropyle, le groupe 1-chlorométhyle, le groupe 3-cyanopropyle ; des groupes aryle, comme le groupe phényle ; des groupes aralkyle, comme le groupe benzyle ; des groupes alcoxy ou des groupes alcoxyalkyle, comme le groupe éthoxy ou le groupe éthoxypropyle, sont utilisés.

21. Utilisation selon la revendication 19 ou 20, **caractérisée en ce que** dans le procédé, en tant que composés dotés de doubles liaisons oléfiniques, des composés des formules
CH₂=CH-CH₂-O- (CH₂-CH₂O-)ₓ-(CH₂-CH(R'')O-)_{y}-(SO)_{z}-R'''
CH₂=CH-O-(CH₂-CH₂O-)ₓ-(CH₂-CH (R'')O-)_{y}-R'''
CH₂=CH-CH₂-R^{IV}
CH₂=CH-(O)_{x'}-R^{IV}
dans lesquelles
x = 0 à 100,
x' = 0 ou 1,
y = 0 à 100,
z = 0 à 100,
R" est un groupe alkyle éventuellement substitué comportant 1 à 4 atome(s) de C et
R''' signifie un radical hydrogène ou un groupe alkyle comportant 1 à 4 atome(s) de C ; le groupe -C(O)-R^{V} avec R^{V} = radical alkyle ; le groupe -CH₂-O-R''; un groupe alkylaryle, comme le groupe benzyle ; le groupe - C(O)NH-R'',
R^{IV} signifie un radical hydrocarboné éventuellement substitué comportant 7 à 47, de préférence 13 à 37 atomes de C,
SO signifie le radical C₆H₅-CH(-)-CH₂-O- (radical oxyde de styrène),
sont utilisés.

22. Utilisation selon au moins l'une des revendications 19 à 21, **caractérisée en ce que** la composition est ajoutée au mélange réactionnel en une telle quantité que la concentration totale en platine est de 1 à 100 ppm en poids par rapport au mélange réactionnel.
